# EUROPEAN PATENT APPLICATION

(11) **EP 4 661 098 A1**
(43) Date of publication of application: **10.12.2025**
(21) Application number: 24750444.2
(22) Date of filing: 09.01.2024
(51) Int. Cl.: H01M 4/36, H01M 4/525, H01M 4/505, H01M 10/052, H01M 10/0562, C01G 53/00, C01G 45/12, H01M 4/02

(54) **POSITIVE ELECTRODE ACTIVE MATERIAL FOR ALL-SOLID-STATE SECONDARY BATTERY, PREPARATION METHOD THEREOF, AND ALL-SOLID-STATE SECONDARY BATTERY**

(30) Priority: 31.01.2023 KR 20230013208
(71) Applicant: SAMSUNG SDI CO., LTD., Yongin-si, Gyeonggi-do 17084 (KR)
(72) Inventor: YUN, Pilsang, Yongin-si, Gyeonggi-do 17084 (KR); PARK, Sangin, Yongin-si, Gyeonggi-do 17084 (KR); KIM, Do-Yu, Yongin-si, Gyeonggi-do 17084 (KR); KIM, Hyunbeom, Yongin-si, Gyeonggi-do 17084 (KR)
(74) Representative: Michalski Hüttermann & Partner Patentanwälte mbB
(86) International application number: PCT/KR2024/000410
(87) International publication number: WO 2024/162642

(57) **Abstract**

Disclosed are a positive electrode active material for an all-solid-state rechargeable battery, a preparation method thereof and a rechargeable lithium battery, the positive electrode active material which includes a first positive electrode active material including secondary particles including a lithium nickel-cobalt-aluminum-based composite oxide and formed by agglomerating a plurality of primary particles wherein at least a portion of the primary particles are oriented radially, and a buffer layer disposed on the surface of the secondary particles and including a lithium compound and a metal oxide; and a second positive electrode active material including secondary particles including a lithium nickel-cobalt-aluminum-manganese-based composite oxide and formed by agglomerating a plurality of primary particles, and a buffer layer disposed on the surface of the secondary particles and including a lithium compound and a metal oxide, wherein an average particle diameter of secondary particles of the first positive electrode active material is larger than an average particle diameter of the secondary particles of the second positive electrode active material.

## Description

### [Technical Field]

### [Background Art]

### 1. Field

A positive electrode active material for an all-solid-state rechargeable battery, a preparation method thereof, and an all-solid-state rechargeable battery including the same are disclosed.

### 2. Description of the Related Art

Recently, as a risk of explosion of a battery using a liquid electrolyte has been reported, development of an all-solid-state rechargeable battery has been actively conducted. However, a solid electrolyte, compared to the liquid electrolyte, has problems of low ionic conductivity, resistance on the interface with solid particles of a positive electrode active material and the like in a battery, deterioration of the ion conduction performance by formation of a depletion layer by solid-to-solid bonding, and the like. There is a need for the development of positive electrode active materials that can be used with these solid electrolytes, and the development of positive electrode active materials that can improve the overall performance, such as capacity characteristics and long cycle-life characteristics, of all-solid-state rechargeable batteries is also necessary.

### [Disclosure]

### [Technical Problem]

Provided are a positive electrode active material having high capacity, high initial charge/discharge efficiency, and excellent cycle-life characteristics, a method of manufacturing the same, and an all-solid-state rechargeable battery including the same.

### [Technical Solution]

In an embodiment, a positive electrode active material for an all-solid-state rechargeable battery includes a first positive electrode active material including secondary particles including a lithium nickel-cobalt-aluminum-based composite oxide and formed by agglomerating a plurality of primary particles wherein at least a portion of the primary particles are arranged radially, and a buffer layer disposed on the surface of the secondary particles and including a lithium compound and a metal oxide; and a second positive electrode active material including secondary particles including a lithium nickel-cobalt-aluminum-manganese-based composite oxide and formed by agglomerating a plurality of primary particles, and a buffer layer disposed on the surface of the secondary particles and including a lithium compound and a metal oxide, wherein an average particle diameter of secondary particles of the first positive electrode active material is larger than an average particle diameter of the secondary particles of the second positive electrode active material.

In another embodiment, a method of preparing a positive electrode active material for an all-solid-state rechargeable battery includes mixing a first positive electrode active material precursor including secondary particles including a nickel-cobalt-aluminum-based composite hydroxide, wherein the secondary particles are formed by agglomerating a plurality of primary particles and at least a portion of the primary particles is arranged radially; a second positive electrode active material precursor including secondary particles including a nickel-cobalt-manganese-based composite hydroxide, wherein the secondary particles are formed by agglomerating a plurality of primary particles; and a lithium raw material and performing a first heat treatment, coating an obtained product with a lithium raw material and a metal raw material, and performing a second heat treatment, wherein an average particle diameter of the secondary particles of the first positive electrode active material precursor is larger than an average particle diameter of the secondary particles of the second positive electrode active material precursor.

In another embodiment, an all-solid-state rechargeable battery includes a positive electrode including the positive electrode active material described above, a negative electrode, and a solid electrolyte layer between the positive electrode and the negative electrode.

### [Advantageous Effects]

According to an embodiment, a positive electrode active material for an all-solid-state rechargeable battery exhibits high capacity, high initial charge/discharge efficiency, and excellent cycle-life characteristics.

### [Description of the Drawings]

FIG. 1 is a schematic view showing the shape of a plate-shaped primary particle according to an embodiment.
FIG. 2 is a view for explaining the definition of a radial in secondary particles according to an embodiment.
FIG. 3 is a schematic view showing a cross-sectional structure of a secondary particle according to an embodiment.
FIGS. 4 and 5 are cross-sectional views schematically illustrating all-solid-state rechargeable batteries according to an embodiment.
FIG. 6 is a graph comparing the voltage according to the charge/discharge capacity of Example 1 and Comparative Examples 1 and 3.
FIG. 7 is a graph comparing the voltage according to the charge/discharge capacity of Example 1 and Comparative Examples 1 and 2.
FIG. 8 is a cycle-life characteristic evaluation graph of Example 1 and Comparative Examples 1 to 3.
FIG. 9 is a graph showing the contents of Co, Al, and Mn in the particles of Example 1 and Comparative Example 3, as measured by inductively coupled plasma (ICP) spectroscopy.
FIG. 10 is a scanning electron microscope (SEM) image of a cross-section cut by a focused ion beam (FIB) of the radial-type large particles of Example 1.
FIG. 11 is an SEM image of a cross-section of the non-radial-type large particles of Comparative Example 2 cut by FIB.
FIG. 12 is a SEM image of the surface of the large particles of Example 1.
FIG. 13 is a SEM image of the surface of the small particles of Example 1.
FIG. 14 is an SEM image of the surface of the large particles of Comparative Example 1.
FIG. 15 is an SEM image of the surface of the small particles of Comparative Example 1.
FIG. 16 is an SEM image of the positive electrode active materials of Example 1 and Comparative Example 3, respectively, and an image showing the distribution of Al by energy dispersive X-ray spectroscopy (EDS).
FIG. 17 is an enlarged image of the portion indicated by the white square box in FIG. 16.
FIG. 18 is a transmission electron microscopy (TEM) image of a cross-section of the small particle of Example 1.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, a laminate, a composite, a copolymer, an alloy, a blend, a reaction product, and the like of the constituents.

Here, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the mean particle size may mean the diameter (D50) of particles having a cumulative volume of 50 volume% in the particle size distribution. As used herein, when a definition is not otherwise provided, the average particle diameter means a diameter (D50) of particles having a cumulative volume of 50 volume% in the particle size distribution that is obtained by measuring the size (diameter or long axis length) of about 20 particles at random in a scanning electron microscope image.

Here, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode Active Material

The positive electrode active material for an all-solid-state rechargeable battery according to an embodiment includes a first positive electrode active material and a second positive electrode active material. The first positive electrode active material includes a lithium nickel-cobalt-aluminum-based composite oxide, and is in a form of secondary particles in which a plurality of primary particles are agglomerated and at least a portion of the primary particles are arranged radially, and a buffer layer disposed on the surface of the secondary particles and including a lithium compound and a metal oxide. The second positive electrode active material includes a lithium nickel-cobalt-aluminum-manganese-based composite oxide, and is in a form of secondary particles in which a plurality of primary particles are agglomerated, and a buffer layer located on the surface of the secondary particles and including a lithium compound and a metal oxide. In addition, the average particle diameter of the secondary particles of the first positive electrode active material is larger than the average particle diameter of the secondary particles of the second positive electrode active material.

The first positive electrode active material may be expressed as large particles, and the second positive electrode active material may be expressed as small particles.

The positive electrode active material according to an embodiment is designed to be optimized for an all-solid-state rechargeable battery, and can realize high capacity while exhibiting high initial charge/discharge efficiency and excellent cycle-life characteristics at the same time.

In the first positive electrode active material, the lithium nickel-cobalt-aluminum-based composite oxide refers to an oxide including lithium, nickel, cobalt, and aluminum, and optionally further including other elements, and may be expressed as Ni-Co-Al or NCA. In the second positive electrode active material, the lithium nickel-cobalt-aluminum-manganese-based composite oxide refers to an oxide including lithium, nickel, cobalt, aluminum, and manganese and optionally further including other elements, and may be expressed as Ni-Co-Al-Mn or NCAM. In the method for preparing a positive electrode active material to be described later, the nickel-cobalt-manganese-based hydroxide, which is the precursor of the second positive electrode active material, refers to a hydroxide including nickel, cobalt, and manganese and optionally other elements, and may be expressed as an Ni-Co-Mn precursor or an NCM precursor.

The positive electrode active material may be prepared through a method of mixing an NCA precursor, which is a first positive electrode active material precursor, and an NCM precursor, which is a precursor of a second positive electrode active material, with a lithium raw material, co-firing them, and then forming the buffer layer.

In the co-firing process, an Al component of the first positive electrode active material precursor, which is a large particle and is in the form of radial secondary particles, moves or diffuses into the precursor of the second positive electrode active material, which is a small particle and is in the form of secondary particles, thereby converting the second positive electrode active material into NCAM. Conversely, an Mn component of the second positive electrode active material precursor does not diffuse into the first positive electrode active material precursor, and thus the first positive electrode active material does not become NCAM but can be maintained as NCA.

In the positive electrode active material prepared in this way, the second positive electrode active material has different shape and composition distribution from the case where the positive electrode active material is simply prepared using the NCAM composition precursor, or the NCAM positive electrode active material that is coated or doped with Al by post-treatment with Al raw material after preparing the NCM positive electrode active material, and are also more excellent capacity and cycle-life characteristics than the aforementioned case.

In addition, the positive electrode active material prepared by the existing method of firing the first positive electrode active material precursor and the second positive electrode active material precursor separately and then mixing them rather than co-firing them has different shape and composition distribution from the positive electrode active material according to an embodiment, a volumetric capacity of the battery is reduced due to the low pellet density, there is a problem of low cycle-life characteristics due to the different deterioration rates of large and small particles, and even if the structural stability is increased by separately doping or coating the second positive electrode active material with Al, there is a problem of capacity decrease due to the addition of Al raw material. Features such as shape and composition distribution of the positive electrode active material according to an embodiment will be described in detail later, and the preparing method will also be described in detail below.

### First Positive Electrode Active Material

The first positive electrode active material includes lithium nickel-cobalt-aluminum-based composite oxide, and this compound may be represented by Chemical Formula 1.

[Chemical Formula 1] Liₐ₁Niₓ₁Co_{y1}Al_{z1}M¹_{w1}O_{2-b1}X_{b1}

In Chemical Formula 1, 0.9≤a1 ≤1.2, 0.7≤x1<1, 0<y1<0.3, 0<z1<0.3, 0≤w1<0.3, 0.9≤x1+y1+z1+w1 ≤ 1.1, and 0≤b1≤0.1, M¹ is one or more element selected from B, Ba, Ca, Ce, Cr, Cu, Fe, Mg, Mo, Nb, Si, Sn, Sr, Ti, V, W, and Zr, and X is one or more element selected from F, P, and S.

In Chemical Formula 1, for example 0.7≤x1≤0.98, 0.01 ≤y1≤0.29, 0.01≤z1≤0.29, 0≤w1≤0.28; 0.8≤x1≤0.98, 0.01≤y1≤0.19, 0.01≤z1≤0.19, 0≤w1 ≤0.18; or 0.9≤x1≤0.98, 0.01 ≤y1≤0.09, 0.01 ≤z1≤0.09, 0≤w1≤0.08.

The first positive electrode active material is in the form of secondary particles in which a plurality of primary particles are agglomerated, and the secondary particles may have spherical, elliptical, polygonal, or irregular shapes. The first positive electrode active material is a large particle, and the average particle diameter of the secondary particles may be 9 µm to 25 µm, for example 9 µm to 20 µm, or 10 µm to 18 µm. Here, the average particle diameter of the secondary particles may be obtained by selecting about 20 particles at random among the large particles in the SEM image of the positive electrode active material, measuring the particle diameter (diameter, long axis, or length of the long axis) to obtain the particle size distribution, and taking the diameter (D50) of particles with a cumulative volume of 50 volume% as the average particle diameter in the particle size distribution.

The average particle diameter of the primary particles constituting the secondary particles of the first positive electrode active material may be less than 200 nm, for example, greater than or equal to 50 nm and less than 200 nm, greater than or equal to 100 nm and less than 200 nm, greater than or equal to 50 nm and less than or equal to 190 nm, or greater than or equal to 50 nm and less than or equal to 180 nm. When the average particle diameter of the primary particles satisfies the above range, the lithium diffusion path is shortened, thereby reducing resistance and improving charge/discharge efficiency. Here, the average particle diameter of the primary particles refers to the size of the primary particles observed on the surface of the secondary particles and may be obtained by selecting about 20 primary particles from the SEM image of the surface of the secondary particles, measuring their particle diameter (diameter, long axis, or length of long axis), and then calculating their arithmetic mean.

At least a portion of the primary particles of the secondary particles of the first positive electrode active material are oriented radially. In this case, the diffusion of lithium increases, improving initial charging and discharging efficiency and securing high capacity. Uniform expansion and contraction may be possible during the intercalation and deintercalation process of lithium, thereby improving the problem of the positive electrode active material breaking during charging and discharging to improve cycle-life characteristics and safety of a battery. In addition, when the first positive electrode active material is in the form of secondary particles in which at least a portion of the primary particles are oriented radially, in the method for preparing the positive electrode active material according to an embodiment, it is advantageous for the Al component to diffuse from the precursor of the first positive electrode active material into the second positive electrode active material precursor, and as a result, a positive electrode active material with improved capacity characteristics, initial charge/discharge efficiency, and cycle-life characteristics can be prepared.

Hereinafter, the radial structure will be described in detail.

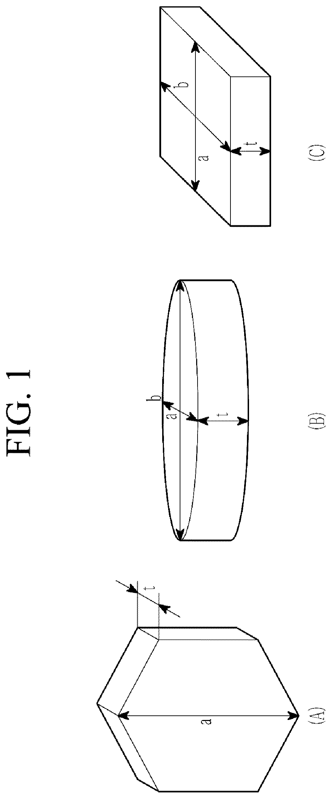

At least some of the primary particles may have a plate shape. FIG. 1 is a schematic view showing the plate shape of primary particles. Referring to FIG. 1, the primary particles have various detailed shapes while having a basic plate structure, for example, (A) a polygonal nanoplate shape such as a hexagon, (B) a nanodisk shape, and (C) a rectangular parallelepiped shape.

In FIG. 1, "a" means the length of the long axis of the primary particle, "b" means the length of the short axis, and "t" means the thickness. Herein, the length (a) of the long axis may mean a maximum length based on the widest surface of the primary particle. Thickness (t) may be a maximum length of the surface that is approximately perpendicular to the widest surface of the primary particle. The direction including the length (a) of the long axis and the length (b) of the short axis is defined as the plane direction, and the direction in which the thickness (t) is defined is defined as the thickness direction.

The thickness (t) of the primary particle may be smaller than the length (a) of the long axis and length (b) of the short axis, which are the lengths in the plane direction. Among the lengths in the plane direction, the length (a) of the long axis may be longer or the same as the length (b) of the short axis.

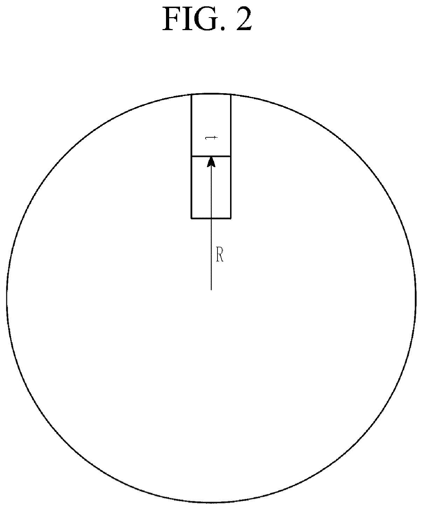

That the primary particles are oriented radially may mean, for example, that the long axis of the primary particles is oriented in a radial direction. FIG. 2 is a view for explaining the definition of a radial. In an embodiment, the radially oriented structure means that, as shown in FIG. 2, the thickness (t) direction of the primary particles is perpendicular to or within an angle of ± 5° of perpendicular to the direction (R) from the secondary particles from the center to the surface of the secondary particles.

In this case, when at least some of the primary particles are oriented radially, the surface of the secondary particles can have relatively many lithium diffusion passages between the primary particles, and many crystal planes capable of lithium transfer are exposed to the outside, improving lithium diffusion and securing high initial efficiency and high capacity. Additionally, if the primary particles are oriented radially, the pores exposed on the surface of the secondary particle are directed toward the center of the secondary particle, which can further promote the diffusion of lithium. In addition, the radially oriented primary particles enable uniform expansion and contraction during intercalation and deintercalation of lithium, and pores exist in the direction of the Miller index (001) plane, which is the direction in which the particles expand when lithium is desorbed, which acts as a buffer. As a result, the probability of cracks occurring when the positive electrode active material contracts and expands is lowered, and the internal pores further alleviate volume changes, which reduces cracks that occur between primary particles during charging and discharging, ultimately improving cycle-life characteristics of rechargeable lithium batteries and reducing the increase in resistance.

As an example, the secondary particle may include an internal portion having an irregular porous structure and an external portion having a radially oriented structure as a region surrounding the internal portion.

The irregular porous structure means that the structure has primary particles and pores, but the pore size, shape, location, etc. are not regular. That is, the primary particles in the internal portion may be oriented without regularity, unlike the primary particles in the external portion. The term "external portion" may refer to a region within 30 length% to 50 length% from the outermost surface, for example, within 40 length% from the outermost surface with respect to a total distance from the center to the surface of the secondary particle, or in an embodiment, may refer to a region within 3 µm from the outermost surface of the secondary particle. The term "internal portion" may refer to a region within 50 length% to 70 length% from the center, for example, within 60 length% from the center with respect to a total distance from the center to the surface of the secondary particle, or in an embodiment, a region excluding the region within 3 µm from the outermost surface of the secondary particle.

Additionally, pores in the internal portion of the secondary particle may be larger than pores in the external portion of the secondary particle. For example, the size of the pores in the internal portion may be 150 nm to 1 µm, and the size of the pores in the external portion may be less than 150 nm. In this way, if the pore size in the internal portion is larger than that in the external portion, there is an advantage that the lithium diffusion distance inside the positive electrode active material is shortened compared to secondary particles where the pore sizes in the internal and external portions are the same, and intercalation of lithium from the external portion is easy, it has an effect of alleviating volume changes that occur during charging and discharging. Herein, the size of the pore means the diameter if the pore is spherical or circular, and the length of the long axis if the pore is oval. The size of the pores may be a value obtained by arbitrarily measuring the sizes of about 20 pores in an SEM image of the cross-section of a secondary particle and then calculating the arithmetic average thereof.

The secondary particles may have open pores on the surface. The open pore size may be less than 150 nm, for example, 10 nm to 148 nm. The open pore is a pore in which some of the walls of the pore are not closed, and is formed by the space between radially oriented plate-shaped primary particles, and is a pore deeply connected from the surface of the secondary particle toward the center. These open pores are connected to the outside and can become passages through which substances can enter and exit. The open pores may be in the form of facing the center on the surface of the secondary particle, and may be formed to a depth of less than or equal to 150 nm, for example, 0.001 nm to 100 nm, for example, 1 nm to 50 nm on average from the surface of the secondary particle. The size and depth of the open pores may be measured by the BJH (Barrett, Joyner and Halenda) method, which is a method derived through the adsorption or desorption content of nitrogen.

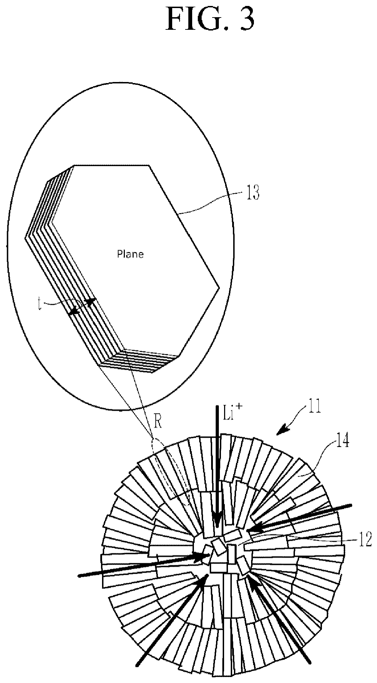

FIG. 3 is a schematic view showing the cross-sectional structure of secondary particle of positive electrode active material. Referring to FIG. 3, the secondary particle 11 has an external portion 14 where plate-shaped primary particles 13 are oriented in a radial direction, and an internal portion 12 where the primary particles 13 are irregularly oriented. The internal portion 12 may have more empty spaces between primary particles than the external portion. Additionally, the pore size and porosity in the internal portion 12 are larger than those in the external portion, and the shape may be irregular. In FIG. 3, the arrow indicates the direction of movement of lithium ions.

The secondary particles have a porous structure in the internal portion, which has the effect of reducing the diffusion distance of lithium ions to the internal portion, and in the external portion, the primary particles are oriented radially, making it easy for lithium ions to be inserted into the surface. Additionally, the size of the primary particles is small, making it easier to secure a lithium transfer path between crystal grains. Additionally, the size of the primary particles is small and the pores between the primary particles alleviate the volume change that occurs during charging and discharging, thereby minimizing the stress caused by the volume change during charging and discharging. These positive electrode active materials can reduce the resistance of rechargeable lithium batteries and improve capacity characteristics and cycle-life characteristics.

The first positive electrode active material includes a buffer layer on the surface of the secondary particle. The above buffer layer may be expressed as a coating layer, a protective layer, etc. The buffer layer may exist in the form of a continuous film or in the form of an island on the surface of the secondary particle. The buffer layer may lower an interfacial resistance between the positive electrode active material and the solid electrolyte particles in the all-solid-state rechargeable battery, thereby improving the initial charge/discharge efficiency and cycle-life characteristics of the all-solid-state rechargeable battery.

The buffer layer includes a lithium compound and a metal oxide. The lithium compound means a compound including lithium, and the metal oxide means an oxide including a metal other than lithium. Here, the metal is a concept that includes a general metal, a transition metal, and a semi-metal. In the metal oxide, the metal may be one or more elements selected from, for example, Al, B, Ca, Ce, Cr, Fe, Mg, Mo, Nb, Si, Sn, Sr, Ta, V, W, and Zr. The lithium compound may be, for example, a carbonate, hydroxide, oxide, or the like including lithium, for example, Li₂CO₃, LiOH, or a combination thereof.

The buffer layer is excellent in improving the performance of the positive electrode active material by facilitating the movement of lithium ions and electron conduction, while lowering the interfacial resistance between the positive electrode active material and the solid electrolyte particles.

The buffer layer may be amorphous. That is, the lithium compound and metal oxide in the buffer layer may be amorphous. When an amorphous compound is formed as a buffer layer on the surface of the positive electrode active material, the interfacial resistance between the positive electrode active material and the solid electrolyte particles can be lowered without impairing the performance of the positive electrode active material, thereby improving the capacity characteristics and cycle-life characteristics of the all-solid-state rechargeable battery.

The thickness of the buffer layer may be approximately 1 nm to 20 nm, for example, 2 nm to 15 nm or 5 nm to 10 nm. The buffer layer is formed with such a very thin thickness that it can effectively reduce the interfacial resistance between solid particles without impairing the performance of the positive electrode active material.

An amount of the buffer layer may be 0.01 wt% to 3 wt%, for example, 0.1 wt% to 3 wt%, 0.5 wt% to 2.5 wt%, or 1 wt% to 2 wt% based on 100 wt% of the first positive electrode active material. Within this amount range, the buffer layer may effectively lower the interfacial resistance between the positive electrode active material and the solid electrolyte particles without reducing the charge/discharge capacity, thereby improving cycle-life characteristics of the all-solid-state rechargeable battery. The amount of the buffer layer may also be expressed as the total amount of the lithium compound and metal oxide.

The first positive electrode active material may be included in an amount of 60 wt% to 95 wt%, for example 70 wt% to 90 wt%, based on 100 wt% of the positive electrode active material for the all-solid-state rechargeable battery. When the first positive electrode active material is included within the above amount range, a positive electrode active material with an optimal composition may be prepared while increasing the pellet density of the positive electrode active material and the energy density of the positive electrode.

### Second Positive Electrode Active Material

The second positive electrode active material may be in the form of secondary particles in which a plurality of primary particles are agglomerated, and may be a small particle, and the average particle diameter of the secondary particles may be 2 µm to 8 µm, for example 2.5 µm to 7 µm, or 3 µm to 6 µm.

The second positive electrode active material includes a lithium nickel-cobalt-aluminum-manganese-based composite oxide, and this compound may be represented by Chemical Formula 2.

[Chemical Formula 2] Liₐ₂Niₓ₂Co_{y2}Al_{z2}Mn_{w2}M²ᵥ₂O_{2-b2}X_{b2}

In Chemical Formula 2, 0.9≤a2≤1.2, 0.7≤x2<1, 0<y2<0.3, 0<z2<0.3, 0<w2<0.3, 0≤v2<0.3, 0.9≤x2+y2+z2+w2+v2≤1.1, and 0≤b2≤0.1, M² is one or more element selected from B, Ba, Ca, Ce, Cr, Cu, Fe, Mg, Mo, Nb, Si, Sn, Sr, Ti, V, W, and Zr, and X is one or more element selected from F, P, and S.

In Chemical Formula 2, for example 0.7≤x2≤0.979, 0.01≤y2≤0.289, 0.001≤z2≤0.289, 0.01≤w2≤0.289, 0≤v2≤0.279; 0.8≤x2≤0.979, 0.01≤y2≤0.189, 0.001≤z2≤0.189, 0.01≤w2≤0.189, 0≤v2≤0.179; or 0.9≤x2≤0.979, 0.01≤y2≤0.089, 0.001≤z2≤0.089, 0.01≤w2≤0.089, 0≤v2≤0.079.

The second positive electrode active material starts as an NCM precursor and becomes NCAM composition by receiving Al component from the first positive electrode active material during the firing process. As described above, the shape and composition distribution are different from those in which the positive electrode active material was manufactured using the NCAM precursor. For example, the second positive electrode active material may have a higher aluminum content in the surface layer of the secondary particles than the aluminum content in the internal portion of the secondary particles.

In the second positive electrode active material, the "internal portion" of the secondary particle may refer to a region from the center of the secondary particle to 70 length% of the radius, and the "surface layer" of the secondary particle refers to a region surrounding the internal portion, which refers to refer to a region from the outermost surface of the secondary particle to a depth corresponding to about 30 length% of the radius. The surface layer is a concept distinct from the buffer layer, and the buffer layer may exist on the surface layer or on the outer surface of the surface layer.

The content of elements such as Al in the internal portion or surface layer of the secondary particles of the second positive electrode active material may be measured through TEM-EELS (Transmission Electron Microscope - Electron Energy Loss Spectroscopy) analysis of a cross-section of the secondary particle cut with a focused ion beam (FIB). Additionally, the aluminum content may mean the at% content of aluminum based on 100 at% of total metal excluding lithium.

For example, the aluminum content in the surface layer of the secondary particle of the second positive electrode active material may be 0.2 at% to 2 at% based on a total metal excluding lithium is 0.2 at% to 2 at%, and the aluminum content in the internal portion of the secondary particle of the second positive electrode active material may be 0 at% to 0.6 at% based on a total metal excluding lithium is 0 at% to 0.6 at%.

In addition, in the second positive electrode active material according to an embodiment, in the surface layer of the secondary particle, the aluminum content in the portion that contacts the first positive electrode active material may be higher than the aluminum content in the portion that does not contact the first positive electrode active material. This is understood to be because the Al component is received from the first positive electrode active material, and it is also a feature that distinguishes it from the case of using the NCAM precursor as small particles or the case of separately coating or doping Al.

For example, in the surface layer of the secondary particles of the second positive electrode active material, the aluminum content based on a total metal excluding lithium in the portion in contact with the first positive electrode active material may be 0.8 at% to 2.0 at%, for example, 0.8 at% to 1.8 at%, or 0.9 at% to 1.6 at%. The aluminum content based on a total metal excluding lithium in the portion not in contact with the first positive electrode active material may be less than 0.8 at%, for example, 0 at% to 0.7 at%, or 0.1 at% to 0.6 at%.

As another expression, it may be referred to that the second positive electrode active material according to an embodiment includes a high-concentration Al region and a low-concentration Al region in the surface layer of the secondary particle. In the high-concentration Al region, the aluminum content based on a total metal excluding lithium may be 0.8 at% to 2.0 at%, for example, 0.8 at% to 1.8 at%, or 0.9 at% to 1.6 at%. In the low-concentration Al region, the aluminum content based on a total metal excluding lithium aluminum may be less than 0.8 at%, for example, 0 at% to 0.7 at%, or 0.1 at% to 0.6 at%.

Additionally, a difference between the aluminum content in the high-concentration Al region and the aluminum content in the low-concentration Al region may be 0.3 at% to 2.0 at%, for example, 0.4 at% to 1.8 at%, or 0.5 at% to 1.5 at%.

It is well known that after preparing a lithium metal composite oxide, doping or coating Al separately by mixing aluminum raw materials and heat treating them is well known. However, in this case, unreacted Al raw material, for example, aluminum oxide such as Al₂O₃, remains in the final positive electrode active material, and as Al is doped unevenly on the surface of the particle, a high concentration of Al doped at a level exceeding 2 at% is created on some portions of the surface, which causes the problem of reduced capacity. Unlike this, in the positive electrode active material according to an embodiment, no separate Al raw material is added during the firing process, and therefore, in the final positive electrode active material, unreacted Al raw materials such as aluminum oxide do not exist on the outermost surfaces of the secondary particles of each of the first and second positive electrode active materials. In addition, even in a region with high Al content in the surface layer of the second positive electrode active material, the Al content appears to be less than or equal to 2 at%, and the difference in Al content between the high-concentration Al area and the low-concentration Al area is also small, at less than or equal to 2 at%. Accordingly, the second positive electrode active material according to an embodiment has structural stability and performance improvement effects due to Al doping, and problems such as capacity reduction caused by adding Al raw material during firing can be effectively suppressed.

The second positive electrode active material includes a buffer layer on the surfaces of the secondary particles. The buffer layer may exist in the form of a continuous film or in the form of an island on the surface of the secondary particle. The buffer layer may lower an interfacial resistance between the positive electrode active material and the solid electrolyte particles in the all-solid-state rechargeable battery, thereby improving the initial charge/discharge efficiency and cycle-life characteristics of the all-solid-state rechargeable battery.

The buffer layer includes a lithium compound and a metal oxide. Because the contents of this buffer layer are the same as those described for the first positive electrode active material, detailed descriptions thereof are omitted.

An amount of the buffer layer may be 0.01 wt% to 3 wt%, for example, 0.1 wt% to 3 wt%, 0.5 wt% to 2.5 wt%, or 1 wt% to 2 wt% based on 100 wt% of the total amount of the first positive electrode active material and the second positive electrode active material. Within this amount range, the buffer layer may effectively lower the interfacial resistance between the positive electrode active material and the solid electrolyte particles without reducing the charge/discharge capacity, thereby improving cycle-life characteristics of the all-solid-state rechargeable battery.

The amount of the buffer layer may also be expressed as the total amount of the lithium compound and metal oxide.

The second positive electrode active material, which is a small particle, may be included in an amount of 5 wt% to 40 wt%, for example, 10 wt% to 30 wt%, based on 100 wt% of the positive electrode active material for the all-solid-state rechargeable battery. When the second positive electrode active material is included in the above content range, a positive electrode active material with an optimal composition may be prepared while increasing the pellet density of the positive electrode active material and the energy density of the positive electrode.

### Method of Preparing Positive Electrode Active Material

Hereinafter, the method of preparing a positive electrode active material will be described in detail.

In an embodiment, a method of preparing a positive electrode active material for an all-solid-state rechargeable battery includes (i) mixing a first positive electrode active material precursor including secondary particles including a nickel-cobalt-aluminum-based composite hydroxide, wherein the secondary particles are formed by agglomerating a plurality of primary particles and at least a portion of the primary particles is oriented radially; a second positive electrode active material precursor including secondary particles including a nickel-cobalt-manganese-based composite hydroxide, wherein the secondary particles are formed by agglomerating a plurality of primary particles; and a lithium raw material and performing a first heat treatment, and (ii) coating an obtained product with a lithium raw material and a metal raw material and performing a second heat treatment, wherein an average particle diameter of the first positive electrode active material precursor is larger than an average particle diameter of the second positive electrode active material precursor.

The above preparing method may be a method of co-firing the NCA precursor of large radial secondary particles and the NCM precursor of small secondary particles by mixing them with a lithium raw material and then forming a buffer layer.

In the process of co-firing, the large particle Al component diffuses or moves into the small particles, making the small particles into the NCAM composition, and thus a positive electrode active material that is a mixture of NCA of the large radial secondary particles and NCAM of the small secondary particles may be prepared. In the temperature range of co-firing, the diffusion rate of the Al component of the large particle is faster than that of the Mn of the small particles, and the Al component is more easily transferred to the small particles as the large particle precursor has the form of radial secondary particles. The final positive electrode active material prepared in this way can exhibit high capacity, high initial charge/discharge efficiency, and excellent cycle-life characteristics.

According to the above preparing method, the volumetric capacity may be greatly improved compared to the existing method in which large and small particles are individually fired and then mixed, and the initial discharge capacity, volumetric capacity, and energy density may be further improved compared to the case where only the small particles are doped or coated with Al after individual firing and the small particles and large particles are mixed. In addition, according to the method according to an embodiment, even if the co-firing method is applied, cycle-life characteristics may be improved compared to the case of using large and small particles having the same components, and initial discharge capacity and energy density may be improved compared to the case of separately doping or coating Al after co-firing. In the method of preparing a positive electrode active material according to an embodiment, an appropriate amount of aluminum is introduced into the large and small particles without mixing aluminum raw materials during the first heat treatment or second heat treatment, thereby ensuring structural stability, and improving capacity reduction problem caused by the addition of aluminum raw materials.

The nickel-cobalt-aluminum-based composite hydroxide, which is the first positive electrode active material precursor, may be specifically represented by Chemical Formula 11.

[Chemical Formula 11] Niₓ₁₁Co_{y11}Al_{z11}M¹¹_{w11}(OH)₂

In Chemical Formula 11, 0.7≤x11<1, 0<y11<0.3, 0<z11<0.3, 0≤w11<0.3, 0.9≤x11+y11+z11+w11 ≤ 1.1, and M¹¹ is one or more elements selected from B, Ba, Ca, Ce, Cr, Cu, Fe, Mg, Mo, Nb, Si, Sn, Sr, Ti, V, W, and Z.

The first positive electrode active material precursor may be made by agglomerating a plurality of primary particles, and may be in the form of secondary particles in which at least a portion of the primary particles are radially oriented. The average particle diameter of the secondary particles may be 9 µm to 25 µm, for example, 9 µm to 20 µm, or 10 µm to 18 µm. Herein, the average particle diameter of the secondary particles may be obtained by selecting about 20 particles at random in the SEM image of the first positive electrode active material precursor, measuring the particle diameter (diameter, long axis, or length of the long axis) to obtain the particle size distribution, and taking the diameter (D50) of particles with a cumulative volume of 50 volume% as the average particle diameter in the particle size distribution.

The first positive electrode active material precursor may be prepared through a co-precipitation reaction. That is, a composite metal raw material is prepared by mixing metal raw materials such as nickel raw materials, and a complexing agent and a pH controlling agent are added thereto to proceed with the co-precipitation reaction while controlling the pH of the mixture to produce a nickel-based composite hydroxide of the desired composition. The complexing agent plays a role in controlling the reaction rate of precipitate formation in the co-precipitation reaction, and may be, for example, ammonium hydroxide (NH₄OH) or citric acid. The pH controlling agent may be, for example, sodium hydroxide (NaOH), sodium carbonate (Na₂CO₃), sodium oxalate (Na₂C₂O₄), and the like. The pH of the mixture may be, for example, adjusted to range from 10 to 13.

The co-precipitation reaction may proceed in several steps, for example, in 2 steps, 3 steps, or 4 steps. At each step, the concentration of the complexing agent, the input rates of the metal raw materials, the pH control range, reaction temperature, reaction time, or stirring power may be adjusted differently. Through this adjustment, it is possible to prepare a positive electrode active material precursor in the form of secondary particles in which at least a portion of the primary particles are radially oriented, and also to prepare secondary particles with different internal and external shapes.

For example, the first positive electrode active material precursor having a radial structure can be for example manufactured by the following method. The method of preparing the first positive electrode active material precursor may include a first process, a second process, and a third process for forming a core, an intermediate layer, and a shell in that order. In the first process, the complexing agent, pH controlling agent, and metal raw materials are added to the reactor and reacted. At this time, the concentration of the complexing agent may be 0.1 M to 0.7 M and the input amount may be 6 mL/min to 12 mL/min. The concentrations of the metal raw materials may be 0.1 M to 3.5 M and the input amounts thereof may be 50 mL/min to 100 mL/min. Subsequently, in the second process, the complexing agent, pH controlling agent, and metal raw materials are further added. At this time, the concentration of the complexing agent may be 0.3 M to 1.0 M and the input amount thereof may be 8 mL/min to 15 mL/min. The concentrations of the metal raw materials may be 0.1 M to 3.5 M and the input amounts thereof may be 60 mL/min to 120 mL/min. Then, in the third process, the concentrations and input amounts of the complexing agent and metal raw material are further increased or kept the same, so that the particle growth rate does not decrease. At this time, the concentration of the complexing agent may be 0.35 M to 1. 0M and the input amount thereof may be 12 mL/min to 20 mL/min. The concentration of the metal raw materials may be 0.1 M to 3.5 M and the input amounts thereof may be 70 mL/min to 150 mL/min. In the first to third processes, pH may be adjusted between 10 and 12.

The nickel-cobalt-manganese-based composite hydroxide, which is a second positive electrode active material precursor, may be specifically represented by Chemical Formula 12.

[Chemical Formula 12] Niₓ₁₂Co_{y12}Mn_{w12}M¹²ᵥ₁₂(OH)₂

In Chemical Formula 12, 0.7≤x12<1, 0<y12<0.3, 0<w12<0.3, 0≤v12<0.3, 0.9≤x12+y12+w12+v12≤ 1.1, and M¹² is one or more elements selected from B, Ba, Ca, Ce, Cr, Cu, Fe, Mg, Mo, Nb, Si, Sn, Sr, Ti, V, W, and Zr.

The second positive electrode active material precursor may be in the form of secondary particles in which a plurality of primary particles are agglomerated. The average particle diameter of the secondary particles may be 2 µm to 8 µm, for example 2.5 µm to 7 µm, or 3 µm to 6 µm. Herein, the average particle diameter of the secondary particles may be obtained by selecting about 20 particles at random among the large particles in the SEM image of the second positive electrode active material precursor, measuring the particle diameter (diameter, long axis, or length of the long axis) to obtain the particle size distribution, and taking the diameter (D50) of particles with a cumulative volume of 50 volume% as the average particle diameter in the particle size distribution.

The second positive electrode active material precursor may be prepared through a general co-precipitation reaction.

A mixing weight ratio of the first positive electrode active material precursor and the second positive electrode active material precursor may be 60:40 to 95:5, or 70:30 to 90:10.

The lithium raw material may be, for example, Li₂CO₃, LiOH, hydrates thereof, or a combination thereof. The lithium raw material may be mixed in an amount of 90 parts by mole to 120 parts by mole based on 100 parts by mole of the total metal in the first positive electrode active material precursor and the second positive electrode active material precursor.

The first heat treatment may be performed at, for example, 600 °C to 1000 °C, or 700 °C to 900 °C. In the above temperature range, the first positive electrode active material and the second positive electrode active material may have each optimal composition.

For example, the first heat treatment may include a temperature increase step and a temperature maintenance step, and the temperature increase time may be set to be longer than the temperature maintenance time. For example, the temperature increase time may be 6 to 16 hours and the temperature maintenance time may be 1 hour to 9 hours, and the temperature increase time may be longer than the temperature maintenance time. In the heat treatment, the temperature increase time may be, for example, 6 hours to 15 hours, 6 hours to 14 hours, 6 hours to 13 hours, or 7 hours to 12 hours, and the temperature maintenance time may be 2 hours to 9 hours, or 3 to 8 hours. Additionally, the ratio of (temperature increase time):(temperature maintenance time) may be 1.1:1 to 10:1, for example, 1.1:1 to 8:1, 1.1:1 to 6:1, 1.1:1 to 5:1, or 1.1:1 to 4:1.

The product obtained through the first heat treatment includes the first positive electrode active material including a lithium nickel-cobalt-aluminum-based composite oxide and being in the form of radial-type secondary particles and the second positive electrode active material including a lithium nickel-cobalt-aluminum-manganese-based composite oxide and being in the form of secondary particles.

In an embodiment, the obtained product is to coat the obtained product with a lithium raw material and a metal raw material and performing the second heat treatment to prepare prepare a final positive electrode active material for an all-solid-state rechargeable battery, on the surface of which a lithium compound and a metal oxide are formed into a buffer layer.

Herein, the metal raw material is a raw material for forming the buffer layer, and the metal may be at least one element selected from Al, B, Ca, Ce, Cr, Fe, Mg, Mo, Nb, Si, Sn, Sr, Ta, V, W, and Zr. The metal raw material may be a compound containing the aforementioned metal. The lithium raw material may be a compound containing lithium.

For example, forming the buffer layer, i.e., coating the obtained product with the lithium raw material and the metal raw material and performing the second heat treatment may be performed in a wet coating method. For example, after mixing the obtained product, the lithium raw material, and the metal raw material in a solvent, which may be removed through drying and the like, the second heat treatment may be performed.

Herein, the solvent may be, for example, an alcohol-based solvent, the lithium raw material may be a lithium alkoxide, and the metal raw material may be a metal alkoxide. The alkoxides may be, for example, C1 to C10 alkoxides or C1 to C6 alkoxides. Here, C1 to C10 and the like indicate that the number of carbons is 1 to 10. If these raw materials are used, an amorphous buffer layer may be effectively formed and coated on the surface of a positive electrode active material.

The second heat treatment may be performed for example within a temperature range of 250 °C to 400 °C, for example, 300 °C to 400 °C, 250 °C to 350 °C, or 300 °C to 350 °C, wherein the amorphous buffer layer may be well coated on the surface of the positive electrode active material.

### Positive Electrode

In an embodiment, a positive electrode for an all-solid-state rechargeable battery including the aforementioned positive electrode active material is provided. The positive electrode for the all-solid-state rechargeable battery includes a current collector and a positive electrode active material layer on the current collector, and the positive electrode active material layer includes the aforementioned positive electrode active material and may further include a binder and/or a conductive material.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

An amount of the binder in the positive electrode active material layer may be approximately 0.1 wt% to 5 wt% based on the total weight of the positive electrode active material layer.

The conductive material is used to impart conductivity to the electrode, and any material that does not cause chemical change and conducts electrons can be used in the battery. Examples thereof may include a carbon-based material such as natural graphite, artificial graphite, carbon black, acetylene black, Ketjen black, a carbon fiber, a carbon nanofiber, and a carbon nanotube; a metal-based material including copper, nickel, aluminum, silver, etc. and in the form of a metal powder or a metal fiber; a conductive polymer such as a polyphenylene derivative; or a conductive material including a mixture thereof.

An amount of the conductive material in the positive electrode active material layer may be 0.1 wt% to 5 wt% based on the total weight of the positive electrode active material layer.

An aluminum foil may be used as the positive electrode current collector, but is not limited thereto.

The positive electrode for the all-solid-state rechargeable battery may further include a solid electrolyte in addition to the aforementioned positive electrode active material, binder, and conductive material.

### Solid Electrolyte

The solid electrolyte may be an inorganic solid electrolyte such as a sulfide-based solid electrolyte, or an oxide-based solid electrolyte.

In an embodiment, the solid electrolyte may be a sulfide-based solid electrolyte with excellent ionic conductivity. The sulfide-based solid electrolyte particles may include for example Li₂S-P₂S₅, Li₂S-P₂S₅-LiX (wherein X is a halogen element, for example I or CI), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n is each an integer and Z is Ge, Zn or Ga), Li₂S-GeS₂, Li₂S-SiS₂-Li₃PO₄, Li₂S-SiS₂-LiₚMO_{q} (wherein p and q each an integer and M is P, Si, Ge, B, Al, Ga, or In), or a combination thereof.

Such a sulfide-based solid electrolyte may be obtained by, for example, mixing Li₂S and P₂S₅ in a molar ratio of 50:50 to 90:10 or 50:50 to 80:20 and optionally performing heat treatment. Within the above mixing ratio range, a sulfide-based solid electrolyte having excellent ionic conductivity may be prepared. The ionic conductivity may be further improved by adding SiS₂, GeS₂, B₂S₃, and the like as other components thereto.

Mechanical milling or a solution method may be applied as a mixing method of sulfur-containing raw materials for preparing a sulfide-based solid electrolyte. The mechanical milling is to make starting materials into particulates by putting the starting materials in a reactor and fervently stirring them. The solution method may be performed by mixing the starting materials in a solvent to obtain a solid electrolyte as a precipitate. In addition, in the case of heat treatment after mixing, crystals of the solid electrolyte may be more robust and ionic conductivity may be improved. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte particles according to an embodiment, for example, may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte can be synthesized through the second heat treatment. Through such two or more heat treatments, a robust sulfide-based solid electrolyte having high ionic conductivity and high performance may be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

For example, the sulfide-based solid electrolyte particles may include argyrodite-type sulfide. The argyrodite-type sulfide may be, for example, represented by the chemical formula, LiₐM_{b}P_{c}S_{d}Aₑ (wherein a, b, c, d, and e are all 0 or more and 12 or less, M is Ge, Sn, Si, or a combination thereof, and A is F, Cl, Br, or I), and as a specific example, it may be represented by the chemical formula of Li₇₋ₓPS₆₋ₓAₓ (wherein x is 0.2 or more and 1.8 or less, and A is F, Cl, Br, or I). Specifically, the argyrodite-type sulfide may be Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, and the like.

The sulfide-based solid electrolyte particles including such argyrodite-type sulfide may have high ionic conductivity close to the range of 10⁻⁴ to 10⁻² S/cm, which is the ionic conductivity of general liquid electrolytes at room temperature, and may form an intimate bond between the positive electrode active material and the solid electrolyte without causing a decrease in ionic conductivity, and furthermore, an intimate interface between the electrode layer and the solid electrolyte layer. An all-solid-state rechargeable battery including the same may have improved battery performance such as rate capability, coulombic efficiency, and cycle-life characteristics.

The argyrodite-type sulfide-based solid electrolyte may be prepared, for example, by mixing lithium sulfide and phosphorus sulfide, and optionally lithium halide. Heat treatment may be performed after mixing them. The heat treatment may include, for example, two or more heat treatment steps. The method of preparing the argyrodite-type sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

The average particle diameter (D₅₀) of the sulfide-based solid electrolyte particles may be, for example, 0.1 µm to 5.0 µm, and may be small particles of 0.1 µm to 1.9 µm or large particles of 2.0 µm to 5.0 µm. The average particle diameter of the sulfide-based solid electrolyte particles may be measured using an electron microscope image, and for example, a particle size distribution may be obtained by measuring the size (diameter or length of the long axis) of about 20 particles in a scanning electron microscope image, and D₅₀ may be calculated therefrom.

The solid electrolyte may include an oxide-based inorganic solid electrolyte in addition to a sulfide-based material. The oxide-based inorganic solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0 ≤ y<3), BaTiO₃, Pb(Zr,Ti)O₃ (PZT), Pb₁₋ₓLaₓZr_{1-y}Ti_{y}O₃ (PLZT) (0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (wherein M = Te, Nb, or Zr; x is an integer of 1 to 10), or a mixture thereof.

The solid electrolyte may be in a form of particles, and the average particle diameter (D₅₀) may be less than or equal to about 5.0 µm, for example, about 0.1 µm to about 5.0 µm, about 0.5 µm to about 5.0 µm, about 0.5 µm to about 4.0 µm, about 0.5 µm to about 3.0 µm, about 0.5 µm to about 2.0 µm, or about 0.5 µm to about 1.0 µm. Such a solid electrolyte can effectively penetrate between positive electrode active materials, and has excellent contact with the positive electrode active material and connectivity between solid electrolyte particles.

Based on the total weight of the positive electrode active material layer, the solid electrolyte may be included in an amount of 0.1 wt% to 35 wt%, for example, 1 wt% to 35 wt%, 5 wt% to 30 wt%, 8 wt% to 25 wt%, or 10 wt% to 20 wt%.

Additionally, the positive electrode active material may be included in an amount of 5 wt% to 99 wt% and the solid electrolyte may be included in an amount of 1 wt% to 35 wt%, for example the positive electrode active material may be included in an amount of 80 wt% to 90 wt%, and the solid electrolyte may be included in an amount of 10 wt% to 20 wt% based on a total weight of the positive electrode active material and solid electrolyte in the positive electrode active material layer. If the solid electrolyte is included in the positive electrode at such an amount, the efficiency and cycle-life characteristics of the all-solid-state battery can be improved without reducing the capacity.

### All-solid-state Rechargeable Battery

In an embodiment, an all-solid-state rechargeable battery includes a positive electrode including the aforementioned positive electrode active material and a negative electrode and a solid electrolyte layer between the positive and negative electrodes.

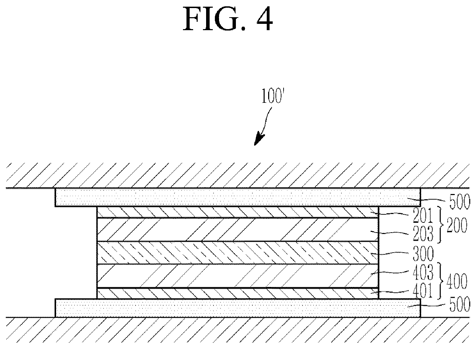

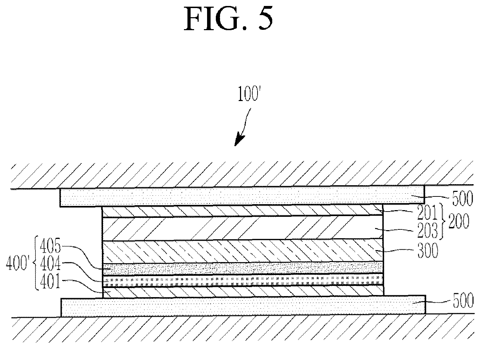

FIG. 4 is a cross-sectional view schematically illustrating an all-solid-state battery according to an embodiment. Referring to FIG. 4, the all-solid-state rechargeable battery 100' may have a structure that an electrode assembly, in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked, is inserted into a battery case. The all-solid-state rechargeable battery 100' may further include at least one elastic layer 500 on the outside of at least either one of the positive electrode 200 and the negative electrode 400. FIG. 5 shows one electrode assembly including the negative electrode 400, the solid electrolyte layer 300, and the positive electrode 200, but two or more electrode assemblies may be stacked to manufacture an all-solid-state rechargeable battery.

### Negative Electrode

The negative electrode for an all-solid-state rechargeable battery includes a current collector, and a negative electrode active material layer on the current collector. The negative electrode active material layer may include a negative electrode active material, and may further include a binder and/or a conductive material.

The negative electrode active material includes a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and one or more metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

For example, the negative electrode active material may include silicon-carbon composite particles. An average particle diameter (D₅₀) of the silicon-carbon composite particles may be for example 0.5 µm to 20 µm. The average particle diameter (D₅₀) is measured with a particle size analyzer and means a diameter of particles with a cumulative volume of 50 volume% in the particle size distribution. Silicon may be included in an amount of 10 wt% to 60 wt% and carbon may be included in an amount of 40 wt% to 90 wt% based on 100 wt% of the silicon-carbon composite particles. For example, the silicon-carbon composite particles may include a core including silicon particles, and a carbon coating layer on the surface of the core. An average particle diameter (D₅₀) of the silicon particles may be 10 nm to 1 µm or 10 nm to 200 nm in the core. The silicon particles may exist as silicon alone, in the form of a silicon alloy, or in an oxidized form. The oxidized form of silicon may be represented by SiOₓ (0<x<2). In addition, a thickness of the carbon coating layer may be about 5 nm to 100 nm.

As an example, the silicon-carbon composite particles may include a core including silicon particles and crystalline carbon, and a carbon coating layer disposed on the surface of the core and including amorphous carbon. For example, in the silicon-carbon composite particles, amorphous carbon may not exist in the core but only in the carbon coating layer. The crystalline carbon may be artificial graphite, natural graphite, or a combination thereof, and the amorphous carbon may be may be formed from coal-based pitch, mesophase pitch, petroleum-based pitch, coal-based oil, heavy petroleum oil, or a polymer resin (phenolic resin, furan resin, polyimide, etc.). Here, an amount of the crystalline carbon may be 10 wt% to 70 wt% and an amount of the amorphous carbon may be 20 wt% to 40 wt% based on 100 wt% of the silicon-carbon composite particles.

In the silicon-carbon composite particle, the core may include a void in the center. A radius of the void may be 30 length% to 50 length% of the radius of the silicon-carbon composite particle.

The aforementioned silicon-carbon composite particles effectively suppress problems such as volume expansion, structural collapse, or particle crushing due to charging and discharging, prevent disconnection of conductive paths, achieve high capacity and high efficiency, and is advantageous to use under a high-voltage or high-speed charging conditions.

The Si-based negative electrode active material or Sn-based negative electrode active material may be mixed with the carbon-based negative electrode active material. When using a mixture of Si-based negative electrode active material or Sn-based negative electrode active material and carbon-based negative electrode active material, a mixing ratio thereof may be 1:99 to 90:10 by weight.

In the negative electrode active material layer, the negative electrode active material may be included in an amount of 95 wt% to 99 wt% based on the total weight of the negative electrode active material layer.

In an embodiment, the negative electrode active material layer further includes a binder, and may optionally further include a conductive material. The amount of the binder in the negative electrode active material layer may be 1 wt% to 5 wt% based on the total weight of the negative electrode active material layer. In addition, when the conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

The water-insoluble binder may include, for example polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity as a type of thickener may be further included. As this cellulose-based compound, one or more types of carboxymethyl cellulose, hydroxypropylmethyl cellulose, methyl cellulose, or an alkali metal salt thereof may be used. The alkali metal may be Na, K, or Li. The amount of the thickener used may be 0.1 parts by weight to 3 parts by weight based on 100 parts by weight of the negative electrode active material.

The conductive material is used to impart conductivity to the electrode, and any material that does not cause chemical change and conducts electrons can be used in the battery. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

As another example, the negative electrode for the all-solid-state rechargeable battery may be a precipitation-type negative electrode. The precipitation-type negative electrode may be a negative electrode which has no negative electrode active material during the assembly of a battery but in which a lithium metal and the like are precipitated or electrodeposited on the negative electrode during the charge of the battery and serve as a negative electrode active material.

FIG. 5 is a schematic cross-sectional view of an all-solid-state rechargeable battery including a precipitation-type negative electrode. Referring to FIG. 5, the precipitation-type negative electrode 400' may include the current collector 401 and a negative electrode coating layer 405 disposed on the current collector. In an all-solid-state rechargeable battery having such a precipitation-type negative electrode 400', initial charging begins in the absence of negative electrode active material, and during charging, high-density lithium metal is precipitated or electrodeposited between the current collector 401 and the negative electrode coating layer 405 or on the negative electrode coating layer 405 to form a lithium metal layer 404, which can serve as a negative electrode active material. Accordingly, in an all-solid-state rechargeable battery that has been charged at least once, the precipitation-type negative electrode 400' may include, for example, a current collector 401, a lithium metal layer 404 on the current collector, and a negative electrode coating layer 405 on the metal layer. The lithium metal layer 404 may be referred to as a layer in which lithium metal, etc. is precipitated during the charging process of the battery, and may be referred to as a metal layer, lithium layer, lithium electrodeposition layer, or negative electrode active material layer.

The negative electrode coating layer 405 may also be referred to as a lithium electrodeposition inducing layer or a negative electrode catalyst layer, and may include a metal, a carbon material, or a combination thereof that acts as a catalyst.

The metal may be a lithiophilic metal and may include, for example, gold, platinum, palladium, silicon, silver, aluminum, bismuth, tin, zinc, or a combination thereof, and may be composed of one of these or various types of alloys. When the metal is present in particle form, an average particle diameter (D₅₀) thereof may be less than or equal to 4 µm, for example, 10 nm to 4 µm.

The carbon material may be, for example, crystalline carbon, amorphous carbon, or a combination thereof. The crystalline carbon may be for example natural graphite, artificial graphite, mesophase carbon microbeads, or a combination thereof. The amorphous carbon may be for example carbon black, activated carbon, acetylene black, denka black, Ketjen black, or a combination thereof.

When the negative electrode coating layer 405 includes the metal and the carbon material, the metal and the carbon material may be, for example, mixed in a weight ratio of 1:10 to 2:1. Here, the precipitation of the lithium metal may be effectively promoted and improve characteristics of the all-solid-state rechargeable battery. The negative electrode coating layer 405 may include, for example, a carbon material on which a catalyst metal is supported or a mixture of metal particles and carbon material particles.

The negative electrode coating layer 405 may include, for example the lithiophilic metal and amorphous carbon, and in this case, the deposition of lithium metal may be effectively promoted. As a specific example, the negative electrode coating layer 405 may include a composite in which a lithiophilic metal is supported on amorphous carbon.

The negative electrode coating layer 405 may further include a binder, and the binder may be, for example, a conductive binder. Additionally, the negative electrode coating layer 405 may further include general additives such as a filler, a dispersant, an ion conductive agent, and the like.

A thickness of the negative electrode coating layer 405 may be for example 100 nm to 20 µm, 500 nm to 10 µm, or 1 µm m to 5 µm.

The precipitation-type negative electrode 400' may further include a thin film, for example, on the surface of the current collector, that is, between the current collector and the negative electrode catalyst layer. The thin film may include an element capable of forming an alloy with lithium. The element capable of forming an alloy with lithium may be, for example, gold, silver, zinc, tin, indium, silicon, aluminum, bismuth, and the like, which may be used alone or an alloy of more than one. The thin film may further planarize a precipitation shape of the lithium metal layer 404 and much improve characteristics of the all-solid-state rechargeable battery. The thin film may be formed, for example in a vacuum deposition method, a sputtering method, a plating method, and the like. The thin film may have, for example, a thickness of 1 nm to 500 nm.

The lithium metal layer 404 may include lithium metal or lithium alloy. For example, the lithium alloy may be Li-Al alloy, Li-Sn alloy, Li-In alloy, Li-Ag alloy, Li-Au alloy, Li-Zn alloy, Li-Ge alloy, or Li-Si alloy.

A thickness of the lithium metal layer 404 may be 1 µm to 500 µm, 1 µm to 200 µm, 1 µm to 100 µm, or 1 µm to 50 µm. If the thickness of the lithium metal layer 404 is too thin, it is difficult to perform the role of a lithium storage, and if it is too thick, the battery volume may increase and performance may deteriorate.

When applying such a precipitation-type negative electrode, the negative electrode coating layer 405 may serve to protect the lithium metal layer 404 and suppress the precipitation growth of lithium dendrite. Accordingly, short circuit and capacity degradation of the all-solid-state battery may be suppressed and cycle-life characteristics can be improved.

### Solid Electrolyte Layer

The solid electrolyte layer 300 may include a sulfide-based solid electrolyte, an oxide-based solid electrolyte, etc. Because the amounts of the sulfide-based solid electrolyte and oxide-based solid electrolyte are as described above, a detailed description thereof is omitted.

Meanwhile, the average particle diameter (D₅₀) of the solid electrolyte included in the solid electrolyte layer 300 may be larger than the average particle diameter (D₅₀) of the solid electrolyte included in the positive electrode 200. In this case, the energy density of the all-solid-state rechargeable battery can be maximized while increasing the mobility of lithium ions to improve the overall performance. For example, the average particle diameter (D₅₀) of the solid electrolyte included in the positive electrode 200 may be 0.1 µm to 1.9 µm, or 0.1 µm to 1.0 µm, and the average particle diameter (D₅₀) of the solid electrolyte included in the solid electrolyte layer 300 may be 2.0 µm to 5.0 µm, or 2.0 µm to 4.0 µm, or 2.5 µm to 3.5 µm. When the particle size ranges are satisfied, the energy density of the all-solid-state rechargeable battery is maximized while the transfer of lithium ions is facilitated, so that resistance is suppressed, and thus the overall performance of the all-solid-state rechargeable battery can be improved. Herein, the average particle diameter (D₅₀) of the solid electrolyte may be measured through a particle size analyzer using a laser diffraction method.

The solid electrolyte layer may further include a binder in addition to the solid electrolyte. Here, a styrene butadiene rubber, polytetrafluoroethylene, polyvinylidene fluoride, polyethylene, an acrylate-based polymer, or a combination thereof may be used as a binder, but is not limited thereto, and any binder used in the relevant technical field may be used. The acrylate-based polymer may be, for example, butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. Because a forming process of the solid electrolyte layer is well known in the art, a detailed description thereof will be omitted.

A thickness of the solid electrolyte layer may be, for example, 10 µm to 150 µm.

The solid electrolyte layer may further include an alkali metal salt and/or an ionic liquid and/or a conductive polymer.

The alkali metal salt may be, for example, a lithium salt. An amount of the lithium salt in the solid electrolyte layer may be greater than or equal to 1 M, for example, 1 M to 4 M. In this case, the lithium salt may improve ionic conductivity by improving lithium ion mobility of the solid electrolyte layer.

The lithium salt may include for example LiSCN, LiN(CN)₂, Li(CF₃SO₂)₃C, LiC₄F₉SO₃, LiN(SO₂CF₂CF₃)₂, LiCl, LiF, LiBr, Lil, LiB(C₂O₄)₂, LiBF₄, LiBF₃(C₂F₅), lithium bis(oxalato)borate (LiBOB), lithium oxalyldifluoroborate (LIODFB), lithium difluoro(oxalato)borate (LiDFOB), lithium bis(trifluoro methanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄, or a mixture thereof.

In addition, the lithium salt may be an imide type, and for example, the imide type lithium salt may include lithium bis(trifluoro methanesulfonyl)imide (LiTFSI, LiN(SO₂CF₃)₂), lithium bis(fluorosulfonyl)imide (LiFSI, LiN(SO₂F)₂). The lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) at least one anion selected from BF₄-, PF₆-, AsF₆-, SbF₆-, AICl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be, for example, one or more selected from N-methyl-N-propylpyrrolidinium bis(trifluoromethanesulfonyl)imide N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90: 10, 40:60 to 90:10, or 50:50 to 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state rechargeable battery may be improved.

The all-solid-state rechargeable battery may be a unit cell having a structure of a positive electrode/solid electrolyte layer/negative electrode, a bicell having a structure of a negative electrode/solid electrolyte layer/positive electrode/solid electrolyte layer/negative electrode, or a stacked battery in which the structure of the unit cell is repeated.

The shape of the all-solid-state rechargeable battery is not particularly limited, and may be, for example, a coin type, a button type, a sheet type, a stack type, a cylindrical shape, a flat type, and the like. In addition, the all-solid-state rechargeable battery may be applied to a large-sized battery used in an electric vehicle or the like. For example, the all-solid-state rechargeable battery may also be used in a hybrid vehicle such as a plug-in hybrid electric vehicle (PHEV). In addition, it may be used in a field requiring a large amount of power storage, and may be used, for example, in an electric bicycle or a power tool. In addition, the all-solid-state rechargeable battery may be used in various fields such as portable electronic devices.

### [Mode for Invention]

Hereinafter, examples of the present invention and comparative examples are described. It is to be understood, however, that the examples are for the purpose of illustration and are not to be construed as limiting the present invention.

### Example 1

### 1. Preparation of First Nickel-based Composite Hydroxide

A first nickel-based composite hydroxide (Ni_{0.945}Co_{0.04}Al_{0.015}(OH)₂), which was a precursor of the first positive electrode active material, was synthesized through a co-precipitation method described later. A mixed solution of metal raw materials was prepared by dissolving nickel sulfate (NiSO₄ · 6H₂O), cobalt sulfate (CoSO₄ · 7H₂O), and sodium aluminum sulfate (NaAl(SO₄)₂ · 12H₂O) in distilled water as a solvent at a molar ratio of 94.5:4:1.5. In addition, aqueous ammonia (NH₄OH) and sodium hydroxide (NaOH) were prepared as a precipitant to form the complex.

### [First Step: 2.5 kW/m³, NH₄OH 0.40 M, pH 10.5 to 11.5, and reaction time of 6 hours]

First, aqueous ammonia having a concentration of 0.40 M was added in a reactor. While a metal raw material mixed solution and a complexing agent (NH₄OH) were added thereto respectively at 85 ml/min and 10 ml/min at 50 °C under a stirring power of 2.5 kW/m³, a reaction was started. While NaOH was added thereto to maintain pH, the reaction was performed for 6 hours. Core particles obtained as a reaction result had an average size of about 6.5 µm to 7.5 µm and then, a second step was performed as follows.

### [Second Step: 2.0 kW/m³, NH₄OH 0.45 M, pH 10.5 to 11.5, and reaction time of 18 hours]

The metal raw material mixed solution and the complexing agent were added thereto respectively at 85 ml/min and 12 ml/min, while the reaction temperature was maintained at 50 °C, so that a concentration of the complexing agent might be 0.45 M. While adding NaOH thereto in order to maintain pH, the reaction was performed for 18 hours. Herein, the reaction was performed by lowering the stirring power by 2.0 kW/m³ than that of the first step. Particles having a core and an intermediate layer produced from this reaction had an average size of 13.5 µm to 14 µm, and then, a third step was performed as follows.

### [Third Step: 1.5 kW/m³, NH₄OH 0.45 M, pH 10.5 to 11.5, and reaction time of 14 hours]

While maintaining the reaction temperature of 50 °C, the input rate of the metal raw material mixed solution and the complexing agent and the concentration of the complexing agent were the same as in second step. While adding NaOH thereto in order to maintain pH, the reaction was performed for 14 hours. At this time, the stirring power was lowered to 1.5 kW/m³, which was lower than the second step, and the reaction proceeds. The obtained product was washed and dried with hot air at about 150 °C for 24 hours to obtain a first nickel-based composite hydroxide (Ni_{0.945}CO_{0.04}Al_{0.015}(OH)₂).

### 2. Preparation of First Lithium Nickel-based Composite Oxide

A second nickel-based composite hydroxide (Ni_{0.94}Co_{0.04}Mn_{0.02}(OH)₂), a precursor of a second positive electrode active material, was synthesized through a co-precipitation method described later. First, nickel sulfate (NiSO₄ · 6H₂O), cobalt sulfate (CoSO₄ · 7H₂O), and manganese sulfate (MnSO4 · H2O) in a molar ratio of 94:4:2 were mixed in distilled water as a solvent to prepare a mixed metal raw material solution. In order to form a complex compound, ammonia water (NH₄OH) and sodium hydroxide (NaOH) as a precipitant were prepared.

Then, the ammonia water at a concentration of 0.25 M was added to a reactor. While the mixed metal raw material solution and the complexing agent were added thereto respectively at 142 ml/min and 34 ml/min at a reaction temperature of 50 °C at a stirring power of 3.0 kW/m³, a reaction was initiated. The reaction was performed for 30 hours, while NaOH was added thereto to maintain pH. As a reaction result, the obtained particles reached an average size of 4 µm, completing the reaction. The obtained product was washed and dried with hot air at about 150 °C for 24 hours to obtain a second nickel-based composite hydroxide (Ni_{0.94}Co_{0.04}Mn_{0.02}(OH)₂).

### 3. Preparation of Positive Electrode Active Material

80 wt% of the first nickel-based composite hydroxide (Ni_{0.945}Co_{0.04}Al_{0.015}(OH)₂) and 20 wt% of the second nickel-based composite hydroxide (Ni_{0.94}Co_{0.04}Mn_{0.02}(OH)₂) were mixed, and100 parts by mole of LiOH was mixed based on 100 parts by mole of the total metal. A positive electrode active material was prepared by performing a first heat treatment in an oxygen atmosphere at a temperature of 700 °C for 8 hours and maintaining the temperature for 7 hours.

The method for forming a buffer layer on the prepared positive electrode active material is a wet coating method as follows. Dehydrated 2-propanol, a methanol solution including 10% lithium methoxide, and zirconium isopropoxide were mixed at a molar ratio of 200:2:1, and the positive electrode active material was added and dispersed therein. To prevent agglomeration of the positive electrode active material particles, the solvent was evaporated under vacuum at 50 °C while irradiating with ultrasonic waves. The obtained product was filtered and heat-treated at 350 °C for 1 hour in an air atmosphere to obtain a positive electrode active material coated with a buffer layer including Li₂CO₃, LiOH, and ZrO₂ at a concentration of about 0.25 wt%.

### 4. Manufacturing of Positive Electrode

A positive electrode composition was prepared by mixing 84.9 wt% of a positive electrode active material coated with a buffer layer, 13.61 wt% of an argyrodite-type solid electrolyte of Li₅PS₅Cl, 1 wt% of a PVdF binder, 0.35 wt% of a carbon nanotube conductive material, and 0.14 wt% of hydrogenated nitrile butadiene rubber (HNBR) as a dispersant in an isobutyryl isobutyrate (IBIB) solvent. This was coated to the positive electrode collector, dried, and then compressed (hydrostatic pressing (WIP), 500 MPa, 85 °C, 30 min) to prepare the positive electrode.

### 5. Manufacturing of All-solid-state Rechargeable Battery Cell

An Ag/C composite was prepared by mixing carbon black having a primary particle diameter of about 30 nm and silver (Ag) having an average particle diameter (D50) of about 60 nm in a weight ratio of 3:1, and 0.25 g of the composite was added to 2 g of an NMP solution including 7 wt% of polyvinylidene fluoride binder and mixed to prepare a negative electrode coating layer composition. This was coated on a negative electrode current collector and then dried to prepare a precipitation-type negative electrode in which a negative electrode coating layer was formed on the current collector.

A composition for forming a solid electrolyte layer was prepared by adding and mixing an argyrodite-type solid electrolyte of Li₅PS₅Cl and an IBIB solvent including an acrylic binder. The composition was cast onto a releasing film and dried at room temperature to produce a solid electrolyte layer.

The prepared positive electrode, negative electrode, and solid electrolyte layers were cut, the solid electrolyte layer was stacked on the positive electrode, and then the negative electrode is stacked thereon. This is sealed in a pouch shape and subjected to warm isostatic press (WIP) at high temperature at 80 °C and 500 MPa for 30 minutes to manufacture an all-solid-state rechargeable battery cell.

### Comparative Example 1

A third nickel-based composite hydroxide (Ni_{0.945}CO_{0.04}Al_{0.015}(OH)₂) in a form of secondary particles having an average particle diameter (D₅₀) of about 4 µm in which a plurality of primary particles were agglomerated was prepared by using the metal raw material mixed solution used in the method for preparing the first nickel-based composite hydroxide and performing a co-precipitation reaction substantially in the same manner as the method for preparing the second nickel-based composite hydroxide.

Except for using the third nickel-based composite hydroxide instead of the second nickel-based composite hydroxide, a positive electrode active material and an all-solid-state rechargeable battery cell were manufactured substantially in the same manner as in Example 1.

### Comparative Example 2

While adding diluted ammonia water to a continuous reactor, the metal raw material mixed solution used in the method of preparing the first nickel-based composite hydroxide was continuously added thereto, and a sodium hydroxide aqueous solution was added thereto to maintain pH inside the reactor. A reaction slowly proceeded for about 80 hours, and when the reaction was stabilized, a product overflowing therefrom was collected. The obtained product was washed and dried with hot air at about 150 °C for 24 hours, preparing a fourth nickel-based composite hydroxide (Ni_{0.945}Co_{0.04}Al_{0.015}(OH)₂) in the form of secondary particles having an average particle diameter (D₅₀) of about 15 µm in which primary particles were not radially arranged.

Except for using the fourth nickel-based composite hydroxide instead of the first nickel-based composite hydroxide, a positive electrode active material and an all-solid-state rechargeable battery cell were manufactured substantially in the same manner as in Example 1.

### Comparative Example 3

A positive electrode active material and a positive electrode and battery cell were manufactured substantially in the same manner as in Example 1 except that in preparing the positive electrode active material of Example, 80 wt% of the first nickel-based composite hydroxide and 20 wt% of the second nickel-based composite hydroxide were mixed, wherein when 100 parts by mole of LiOH was added based on 100 parts by mole of total metal, 0.15 parts by mole of alumina (Al₂O₃) based on 100 parts by mole of the total metal was added thereto,.

In order to help understanding, design details of the positive electrode active materials of Example 1 and Comparative Examples 1 to 3 are briefly presented in Table 1 below.

**(Table 1)**

| | Large particle precursor | Small particle precursor | Al addition | Buffer layer |
|---|---|---|---|---|
| Example 1 | NCA (radial type) | NCM | No | Li₂CO₃, LiOH, ZrO₂ |
| Comparative Example 1 | NCA (radial type) | NCA | No | Li₂CO₃, LiOH, ZrO₂ |
| Comparative Example 2 | NCA (non-radial type) | NCM | No | Li₂CO₃, LiOH, ZrO₂ |
| Comparative Example 3 | NCA (radial type) | NCM | Yes | Li₂CO₃, LiOH, ZrO₂ |

### Evaluation Example 1: Evaluation of Initial Charge/discharge capacity of All-solid-state Rechargeable Battery Cell

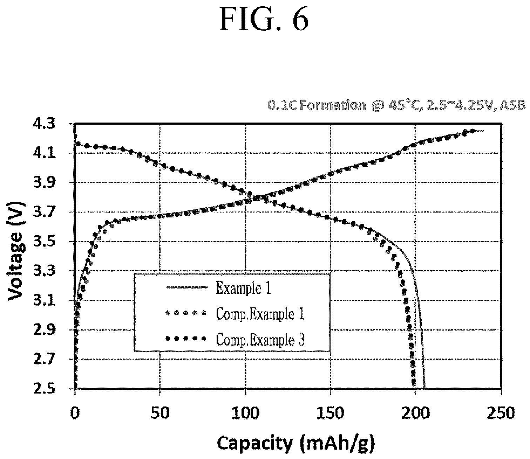

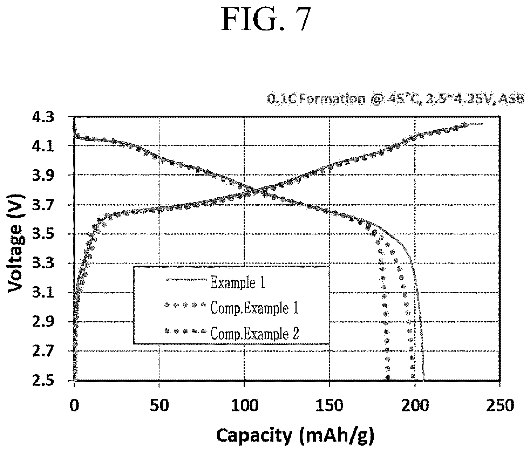

The all-solid-state rechargeable battery cells of Example 1 and Comparative Examples 1 to 3 were charged to an upper limit voltage of 4.25 V at a constant current of 0.1 C and to 0.05 C at the constant voltage and then, discharged to a cut-off voltage of 2.5 V at 0.1 C at 45 °C to measure initial charge/discharge capacity, and the results are shown in Table 2. In addition, Example 1 and Comparative Examples 1 and 3 were compared with respect to a voltage according to charge/discharge capacity and then, shown in FIG. 6, and Example 1 and Comparative Examples 1 and 2 were compared with respect to a voltage according to charge/discharge capacity and then, shown in FIG. 7.

**(Table 2)**

| | Charge capacity (mAh/g) | Discharge capacity (mAh/g) | Efficiency (%) |
|---|---|---|---|
| Example 1 | 240 | 205 | 86 |
| Comparative Example 1 | 233 | 199 | 85 |
| Comparative Example 2 | 231 | 184 | 80 |
| Comparative Example 3 | 236 | 199 | 84 |

Referring to Table 2 and FIG. 6, compared to Comparative Example 1 using NCA as a small particle precursor, Example 1 using NCM as a small particle precursor was confirmed to exhibit low charge/discharge resistance. In addition, Comparative Example 3, in which Al was added to Example 1, exhibited that the resistance increased at the discharge end. In other words, as in Example 1, when a radial-type large particle NCA precursor and a small particle NCM precursor were mixed and fired, both charge and discharge resistances of an all-solid-state rechargeable battery cell were reduced, thereby increasing both charge and discharge capacity as shown in Table 2. However, as in Comparative Example 3, when an aluminum raw material was additionally added thereto during the firing, the resistance was increased, thereby decreasing the charge and discharge capacity.

Referring to FIG. 7, Example 1 using a radial-type precursor exhibited lower resistance at the discharge end than Comparative Example 2 using a non-radial-type large particle NCA precursor, which was in general used in conventional arts. This resistance was also lower than that of Comparative Example 1, which confirmed that the use of the radial-type large particle NCA precursor improved the resistance at the discharge end, thereby improving discharge capacity and efficiency as shown in Table 2.

### Evaluation Example 2: Evaluation of Cycle-life Characteristics of All-solid-state Rechargeable Battery Cell

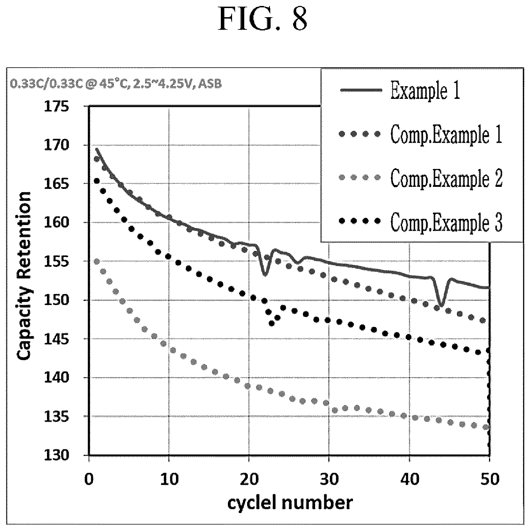

The all-solid-state rechargeable battery cells of Example 1 and Comparative Examples 1 to 3, after performing initial charge and discharge as in Evaluation Example 1, were repeatedly charged/discharged at 0.33 C within a voltage range of 2.5 V to 4.25 V at 45 °C to evaluate cycle-life characteristics, and the results are shown in FIG. 8. In addition, 1^{st} discharge capacity after the initial charge and discharge is shown in Table 3, and in addition, a capacity retention rate of 50^{th} discharge capacity to the 1^{st} discharge capacity is shown in Table 3.

**(Table 3)**

| | 1^{st} discharge capacity (mAh/g) | 50^{th} capacity retention rate (%) |
|---|---|---|
| Example1 | 169 | 90 |
| Comparative Example1 | 168 | 88 |
| Comparative Example2 | 155 | 86 |
| Comparative Example3 | 165 | 87 |

Referring to Table 3, the all-solid-state rechargeable battery cell of Example 1, in which the radial-type large particle NCA precursor and the small particle NCM precursor were simultaneously fired to coat a buffer layer, exhibited the most excellent 1^{st} capacity and 50^{th} capacity retention rate. When NCA was used as a small particle precursor as in Comparative Example 1 or when Al was additionally added as in Comparative Example 3, the 50^{th} capacity retention rate was lowered. In addition, Comparative Example 2 using a non-radial NCA large particle precursor exhibited very low capacity during the cycle-life, as shown in FIG. 8. Accordingly, the radial-type large particle NCA precursor had an effect of improving capacity during the cycle-life, and when the small particle NCM precursor was applied thereto, the capacity retention rate turned out to be further improved during the cycle-life.

### Evaluation Example 3: Evaluation of Small Particle Composition

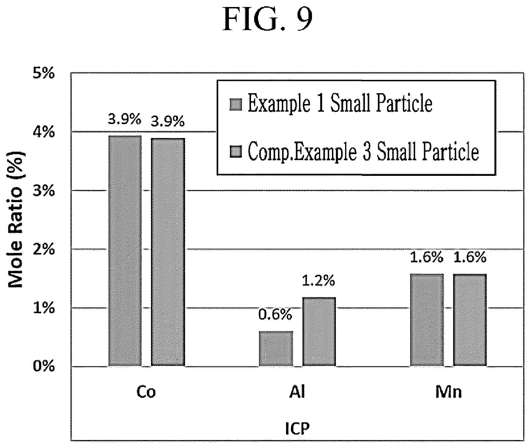

From the final positive electrode active materials prepared in Example 1 and Comparative Example 3, large particles and small particles were separated. The separation of the active materials was performed by using a turbo classifier (Nisshin Engineering Inc.) and nitrogen as a transfer gas. The separated small particles of Example 1 and Comparative Example 3 were subjected to ICP (Inductively Coupled Plasma) analysis to measure each content of cobalt, aluminum, and manganese, and the results are shown in FIG. 9.

Referring to FIG. 9, if the aluminum added in Comparative Example 3 were doped on the large particles and the small particles in the same ratio, the Al content should be 0.03 mol% in the small particles which took 20 wt% but was measured as 1.2 mol%. Accordingly, as in Example 1, even if about 0.6 mol% of Al could be received from the large particle NCA, the additionally added Al was confirmed to be more doped on the small particles than the large particles, which was understood to induce formation of by-reactants of Al and overgrowth of the particles and resultantly, reduce the capacity. On the other hand, Example 1, in which Al was not additionally added, confirmed that 20 wt% of small particle NCM received Al from 80 wt% of large particle NCA, and was doped with Al at a level of 0.6 mol%. The NCAM small particles of Example 1, in which Al was doped in an NCM structure, was understood to exhibit improved capacity retention rate, compared to the NCA small particles of Comparative Example 1. In addition, as the small particles of Comparative Example 3, in which an excessive amount of Al was doped, and large particles of Comparative Example 3 also included a larger amount of Al, initial capacity, efficiency, and cycle-life characteristics were understood to be all lowered.

### Evaluation Example 4: Analysis of Cross-section of Positive Electrode Active Material

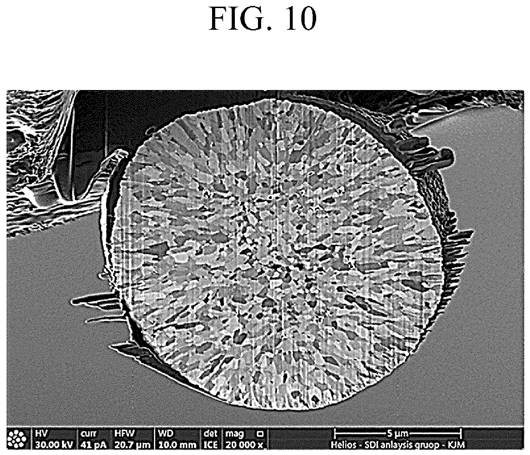

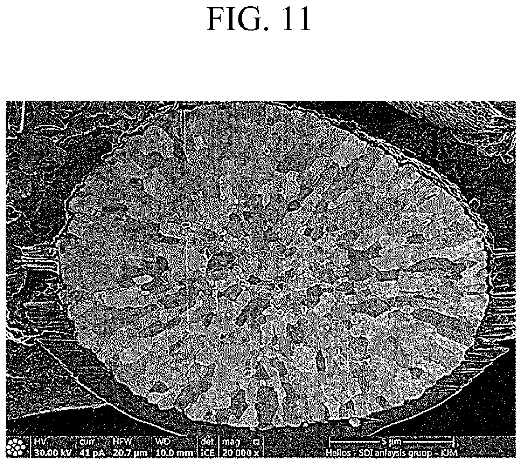

FIG. 10 is an SEM image of a cross-section of a radial NCA large particle of Example 1 cut by a focused ion beam (FIB), and FIG. 11 is an SEM image of a cross-section of a non-radial NCA large particle of Comparative Example 2 cut by a focused ion beam (FIB), which was prepared according to a conventional art.

Comparing FIGS. 10 and 11, it was confirmed that the large primary particles of Example 1 were small and well oriented in the surface direction with a long aspect ratio. It was understood that when a radial-type large particle precursor was used to prepare a positive electrode active material, the positive electrode active material had a radial structure facilitating in and out of lithium ions, realizing high capacity and in addition, was suppressed from breaking due to its volume change according to charge and discharge during the cycle-life, thereby improving cycle-life characteristics.

### Evaluation Example 5: Evaluation of Primary Particle Size

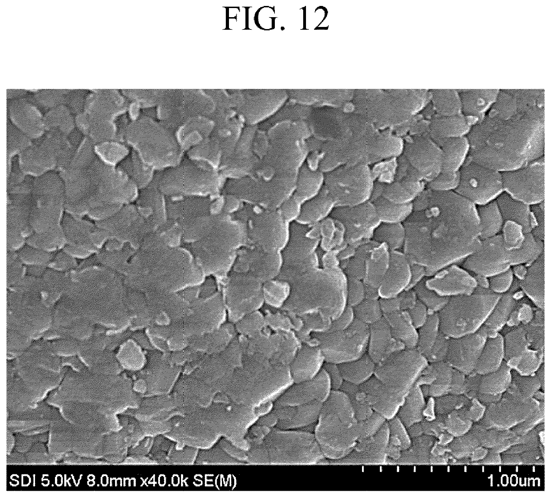

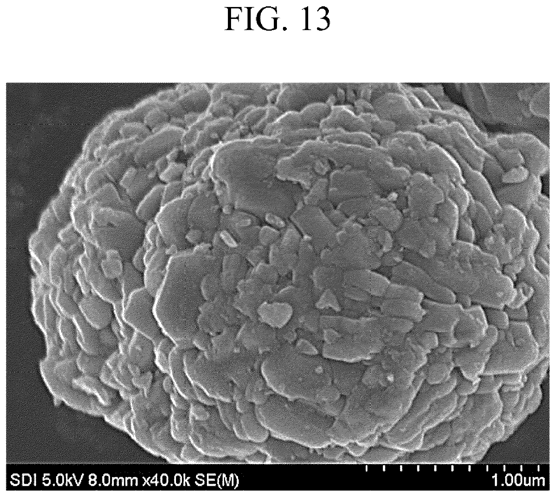

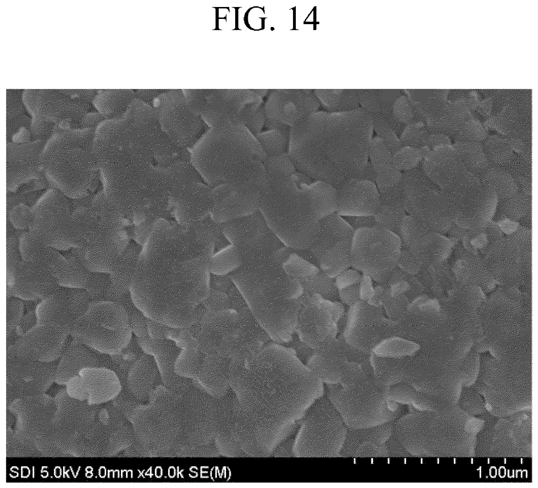

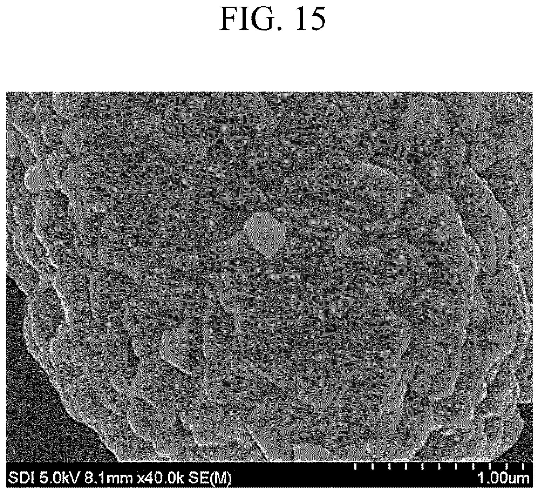

Each SEM image at 40,000 times magnification of the surfaces of the large particles and small particles of Example 1 and Comparative Example 1 was shown in FIGS. 12 to 15. FIG. 12 is the SEM image of the large particle surface of Example 1, and FIG. 13 is the SEM image of the small particle surface of Example 1. FIG. 14 is the SEM image of the large particle surface of Comparative Example 1, and FIG. 15 is the SEM image of the small particle surface of Comparative Example 1.

Comparing FIGS. 12 and 14, the large particles of Example 1, which were fired simultaneously with the NCM small particles, exhibited that a particle size of the large particles, the primary particles, was also reduced. In addition, comparing FIGS. 13 and 15, the small particles of Example 1 exhibited that a particle size of the small particles, the primary particles, was reduced. Due to this reduced primary particle size, as shown in FIG. 6, it was understood that resistance at the discharge end was improved, thereby increasing initial capacity and improving initial charge/discharge efficiency. In addition, the problem of the positive electrode active material breaking due to the volume change according to the charge and discharge was suppressed, as shown in FIG. 8, improving cycle-life characteristics.

### Evaluation Example 6: SEM-EDS Evaluation

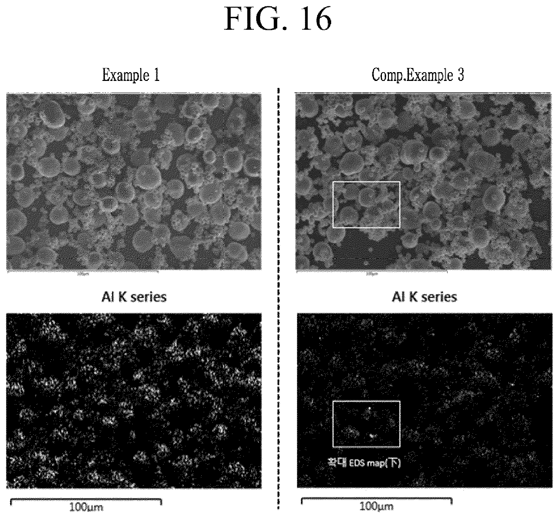

Each positive electrode active material of Example 1, in which a radial NCA large particle precursor and an NCM small particle precursor were mixed and simultaneously co-fired to make the small particles into NCAM, and Comparative Example 3, in which the small particles were made into NCAM by adding Al₂O₃ to dope Al, was taken an image of with SEM to check Al distributions through EDS, as shown in FIG. 16.

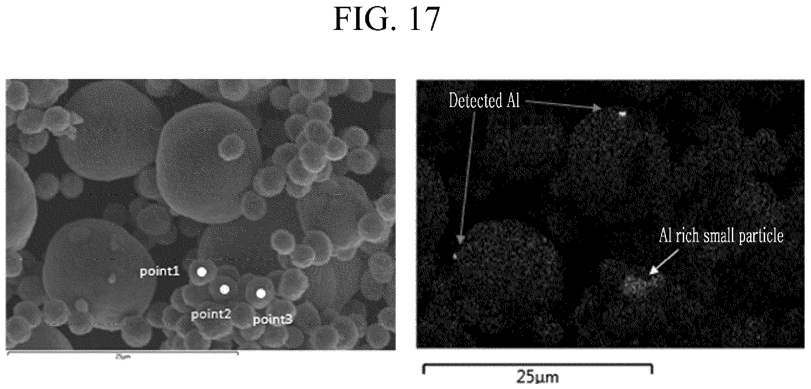

Referring to FIG. 16, Comparative Example 3 exhibited that Al was more non-uniformly distributed than Example 1. In order to clearly confirm this, a nonuniform portion of Comparative Example 3, which was marked with a white square box in FIG. 16, was enlarged and shown on the left side of FIG. 17, and on the right side of FIG. 17, the Al distribution according to the SEM-EDS analysis is shown.

In the left image of FIG. 17, each content (at%) of O, Ni, Co, Mn, and Al elements at Points 1 to 3 corresponding to the small particles was analyzed, and the results are shown in Table 4 below.

**(Table 4)**

| Element | Point 1 | Point 2 | Point 3 |
|---|---|---|---|
| O | 69.2 | 67.7 | 67.1 |
| Ni | 28.8 | 28 | 30.6 |
| Co | 1.3 | 1.1 | 1.4 |
| Mn | 0.5 | 0.5 | 0.6 |
| **Al** | **0.2** | **2.7** | **0.3** |

Referring to the results of Table 4, when doped by adding Al₂O₃ as shown in Comparative Example 3, the Al content on the small particles surface was nonuniform, which confirmed that Al was doped at a high concentration on some portions. Accordingly, it was confirmed that low capacity of Comparative Example 3 was caused by the high-concentration Al-doped small particles.
On the other hand, the large particles of Example 1 were subjected to SEM-EDS analysis on the surface to measure the Mn content, which was detected within an error range, i.e., not detected within a valid range. Because aluminum was not only more easily diffused than manganese within a firing temperature range for the positive electrode active material synthesis but also further more easily moved in the radially-designed large particles precursor, in Example 1, it was understood that the aluminum of the large particles moved to the small particles, but the manganese of the small particles did not move to the large particles.

### Evaluation Example 7: TEM-EELS Evaluation

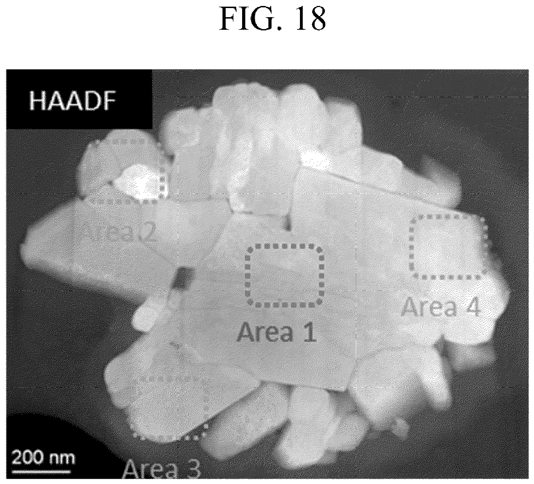

Referring to the SEM-EDS analysis image at the right of FIG. 17, when Al was doped by adding Al₂O₃ as in Comparative Example 3, it was seen that unreacted Al₂O₃ could exist on the positive electrode active material surface. On the other hand, on the positive electrode active material surface of Example 1, the unreacted Al₂O₃ was not found. FIG. 18 is a TEM image of a cross-section of the small particles in the positive electrode active material of Example 1, and then, through TEM-EELS analysis, each content (at%) of C, O, Al, Mn, Co and Ni elements in Area 1 (internal portion) and Areas 2 to 4 (surface layer) was obtained, and the results are shown in Table 5 below.

**(Table 5)**

| Element | Area 1 (internal portion) | Area 2 (surface layer) | Area 3 (surface layer) | Area 4 (surface layer) |
|---|---|---|---|---|
| C | 36.95 | 32.11 | 39.7 | 10.05 |
| O | 40.09 | 43.63 | 39.73 | 53.17 |
| Al | 0.09 | 0.09 | 0.21 | 0.54 |
| Mn | 0.48 | 0.34 | 0.35 | 0.5 |
| Co | 1.06 | 1.17 | 0.78 | 1.47 |
| Ni | 21.32 | 22.65 | 19.24 | 34.28 |
| **Al/(Ni+Co+Mn+Al)** | **0.39%** | **0.37%** | **1.02%** | **1.47%** |

Referring to Table 5, Areas 3 and 4 contacting with the NCA large particles exhibited a high Al content, but Area 2 not contacting with the NCA large particles exhibited a low Al content, and in addition, Al contents in the internal portion of the small particles and on the surface layer were different. This was understood that because Al moved from the large particles NCA and was doped on the small particle NCM to form NCAM, there were neither excessively Al-doped small particles nor unreacted Al₂O₃ on the positive electrode active material surface, achieving high capacity of Example 1 and improving cycle-life.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### [Description of Symbols]

11: secondary particle
12: internal portion of secondary particle
13: primary particle
14: external portion of secondary particle
100': all-solid-state battery 200: positive electrode
201: positive electrode current collector
203: positive electrode active material layer
300: solid electrolyte layer 400: negative electrode
401: negative current collector
403: negative electrode active material layer
400': precipitation-type negative electrode
404: lithium metal layer
405: negative electrode coating layer 500: elastic layer

## Claims

1. A positive electrode active material for an all-solid-state rechargeable battery, comprising
a first positive electrode active material comprising secondary particles comprising a lithium nickel-cobalt-aluminum-based composite oxide and formed by agglomerating a plurality of primary particles wherein at least a portion of the primary particles are oriented radially and a buffer layer disposed on the surface of the secondary particles and comprising a lithium compound and a metal oxide; and
a second positive electrode active material comprising secondary particles comprising a lithium nickel-cobalt-aluminum-manganese-based composite oxide and formed by agglomerating a plurality of primary particles, and a buffer layer disposed on the surface of the secondary particles and comprising a lithium compound and a metal oxide,
wherein an average particle diameter of secondary particles of the first positive electrode active material is larger than an average particle diameter of the secondary particles of the second positive electrode active material.

2. The positive electrode active material for the all-solid-state rechargeable battery as claimed in claim 1, wherein
an average particle diameter of the secondary particles of the first positive electrode active material is 9 µm to 25 µm, and
an average particle diameter of the secondary particles of the second positive electrode active material is 2 µm to 8 µm.

3. The positive electrode active material for the all-solid-state rechargeable battery as claimed in claim 1, wherein
the second positive electrode active material has a higher aluminum content in a surface layer of the secondary particles than an aluminum content in an internal portion of the secondary particles,
wherein the internal portion of the secondary particle refers to a region from a center of the secondary particle to 70 length% of a radius, and the surface layer of the secondary particle refers to a region surrounding the internal portion, which refers to refer to a region from the outermost surface of the secondary particle to a depth corresponding to 30% of the length of the radius.

4. The positive electrode active material for the all-solid-state rechargeable battery as claimed in claim 3, wherein
the aluminum content in the surface layer of the secondary particle of the second positive electrode active material is 0.2 at% to 2 at% based on a total metal excluding lithium is 0.2 at% to 2 at%, and
the aluminum content in the internal portion of the secondary particle of the second positive electrode active material is 0 at% to 0.6 at% based on a total metal excluding lithium is 0 at% to 0.6 at%.

5. The positive electrode active material for the all-solid-state rechargeable battery as claimed in claim 1, wherein
in a surface layer of the secondary particles of the second positive electrode active material, an aluminum content in the portion that is in contact with the first positive electrode active material is higher than an aluminum content in the portion that is not in contact with the first positive electrode active material.

6. The positive electrode active material for the all-solid-state rechargeable battery as claimed in claim 5, wherein
in a surface layer of the secondary particles of the second positive electrode active material, the aluminum content based on a total metal excluding lithium in the portion in contact with the first positive electrode active material is 0.8 at% to 2.0 at%, and the aluminum content based on a total metal excluding lithium in the portion not in contact with the first positive electrode active material is less than 0.8 at%.

7. The positive electrode active material for the all-solid-state rechargeable battery as claimed in claim 1, wherein
the second positive electrode active material comprises a high-concentration Al region where the aluminum content is 0.8 at% to 2.0 at% based on a total metal excluding lithium, and a low-concentration Al region where the aluminum content is less than 0.8 at% based on a total metal excluding lithium, in a surface layer of the secondary particles.

8. The positive electrode active material for the all-solid-state rechargeable battery as claimed in claim 7, wherein
a difference between the aluminum content in the high-concentration Al region and the aluminum content in the low-concentration Al region is 0.3 at% to 2.0 at%.

9. The positive electrode active material for the all-solid-state rechargeable battery as claimed in claim 1, wherein
the lithium nickel-cobalt-aluminum-manganese-based composite oxide of the second positive electrode active material is represented by Chemical Formula 2:
[Chemical Formula 2] Liₐ₂Niₓ₂Co_{y2}Al_{z2}Mn_{w2}M²ᵥ₂O_{2-b2}X_{b2}
wherein, in Chemical Formula 2, 0.9 ≤ a2 ≤ 1.2, 0.7 ≤ x2<1, 0<y2<0.3, 0<z2<0.3, 0<w2<0.3, 0 ≤ v2<0.3, 0.9 ≤ x2+y2+z2+w2+v2 ≤ 1.1, and 0 ≤ b2 ≤ 0.1, M² is one or more element selected from B, Ba, Ca, Ce, Cr, Cu, Fe, Mg, Mo, Nb, Si, Sr, Sn, Ti, V, W, and Zr, and X is one or more element selected from F, P, and S.

10. The positive electrode active material for the all-solid-state rechargeable battery as claimed in claim 1, wherein
the lithium nickel-cobalt-aluminum-based composite oxide of the first positive electrode active material is represented by Chemical Formula 1:
[Chemical Formula 1] Liₐ₁Niₓ₁Co_{y1}Al_{z1}M¹_{w1}O_{2-b1}X_{b1}
wherein, in Chemical Formula 1, 0.9 ≤ a1 ≤ 1.2, 0.7 ≤ x1<1, 0<y1<0.3, 0<z1<0.3, 0 ≤ w1<0.3, 0.9 ≤ x1+y1+z1+w1 ≤ 1.1, and 0 ≤ b1 ≤ 0.1, M¹ is one or more element selected from B, Ba, Ca, Ce, Cr, Cu, Fe, Mg, Mo, Nb, Si, Sr, Sn, Ti, V, W, and Zr, and X is one or more element selected from F, P, and S.

11. The positive electrode active material for the all-solid-state rechargeable battery as claimed in claim 1, wherein
in the secondary particles of the first positive electrode active material, an average particle diameter of the primary particles is less than 200 nm.

12. The positive electrode active material for the all-solid-state rechargeable battery as claimed in claim 1, wherein
the secondary particle of the first positive electrode active material comprise an internal portion having an irregular porous structure and an external portion having a radially oriented structure as a region surrounding the internal portion.

13. The positive electrode active material for the all-solid-state rechargeable battery as claimed in claim 1, wherein
at least a portion of the primary particles in the secondary particles of the first positive electrode active material has a plate shape, the secondary particles comprise open pores on the surface, and the open pores are formed by a space between radially oriented plate-shaped primary particles, which are pores connected from the surface of the secondary particle toward the center.

14. The positive electrode active material for the all-solid-state rechargeable battery as claimed in claim 1, wherein
the metal in the metal oxide of the buffer layer is at least one element selected from Al, B, Ca, Ce, Cr, Fe, Mg, Mo, Nb, Si, Sn, Sr, Ta, V, W, and Zr.

15. The positive electrode active material for the all-solid-state rechargeable battery as claimed in claim 1, wherein
the buffer layer is amorphous.

16. The positive electrode active material for the all-solid-state rechargeable battery as claimed in claim 1, wherein
wherein the buffer layer of the first positive electrode active material and the buffer layer of the second positive electrode active material each have a thickness of 1 nm to 20 nm.

17. The positive electrode active material for the all-solid-state rechargeable battery as claimed in claim 1, wherein
an amount of the buffer layer is 0.01 wt% to 3 wt% based on 100 wt% of the first positive electrode active material and the second positive electrode active material.

18. The positive electrode active material for the all-solid-state rechargeable battery as claimed in claim 1, wherein
based on 100 wt% of the positive electrode active material for the all-solid-state rechargeable battery,
the positive electrode active material comprises
60 wt% to 95 wt% of the first positive electrode active material, and
5 wt% to 40 wt% of the second positive electrode active material.

19. A method of preparing a positive electrode active material for an all-solid-state rechargeable battery, comprising
mixing a first positive electrode active material precursor comprising secondary particles comprising a nickel-cobalt-aluminum-based composite hydroxide, wherein the secondary particles are formed by agglomerating a plurality of primary particles and at least a portion of the primary particles is oriented radially;
a second positive electrode active material precursor comprising secondary particles comprising a nickel-cobalt-manganese-based composite hydroxide, wherein the secondary particles are formed by agglomerating a plurality of primary particles; and
a lithium raw material,
performing a first heat treatment,
coating an obtained product with lithium raw material and a metal raw material, and
performing a second heat treatment,
wherein an average particle diameter of the secondary particles of the first positive electrode active material precursor is larger than an average particle diameter of the secondary particles of the second positive electrode active material precursor.

20. The method of preparing the positive electrode active material for the all-solid-state rechargeable battery as claimed in claim 19, wherein
the nickel-cobalt-aluminum-based composite hydroxide of the first positive electrode active material precursor is represented by Chemical Formula 11, and
the nickel-cobalt-manganese-based composite hydroxide of the second positive electrode active material precursor is represented by Chemical Formula 12:
[Chemical Formula 11] Niₓ₁₁Co_{y11}Alz₁₁M¹¹_{w11}(OH)₂
wherein, in Chemical Formula 11, 0.7 ≤ x11<1, 0<y11<0.3, 0<z11<0.3, 0 ≤ w11<0.3, 0.9 ≤ x11+y11+z11+w11 ≤ 1.1, and M¹¹ is one or more element selected from B, Ba, Ca, Ce, Cr, Cu, Fe, Mg, Mo, Nb, Si, Sr, Sn, Ti, V, W, and Zr,
[Chemical Formula 12] Niₓ₁₂Co_{y12}Mn_{w12}M¹²ᵥ₁₂(OH)₂
wherein, in Chemical Formula 12, 0.7 ≤ x12<1, 0<y12<0.3, 0<w12<0.3, 0 ≤ v12<0.3, 0.9 ≤ x12+y12+w12+v12 ≤ 1.1, and M¹² is one or more element selected from B, Ba, Ca, Ce, Cr, Cu, Fe, Mg, Mo, Nb, Si, Sr, Sn, Ti, V, W, and Zr.

21. The method of preparing the positive electrode active material for the all-solid-state rechargeable battery as claimed in claim 19, wherein
an average particle diameter of the secondary particles of the first positive electrode active material precursor is 9 µm to 25 µm, and
an average particle diameter of the secondary particles of the second positive electrode active material precursor is 2 µm to 8 µm.

22. The method of preparing the positive electrode active material for the all-solid-state rechargeable battery as claimed in claim 19, wherein
a mixing weight ratio of the first positive electrode active material precursor and the second positive electrode active material precursor is 60:40 to 95:5.

23. The method of preparing the positive electrode active material for the all-solid-state rechargeable battery as claimed in claim 19, wherein
the first heat treatment is performed in a temperature range of 600 °C to 1000 °C.

24. The method of preparing the positive electrode active material for the all-solid-state rechargeable battery as claimed in claim 19, wherein
the metal in the metal raw material is at least one element selected from Al, B, Ca, Ce, Cr, Fe, Mg, Mo, Nb, Si, Sn, Sr, Ta, V, W, and Zr.

25. The method of preparing the positive electrode active material for the all-solid-state rechargeable battery as claimed in claim 19, wherein
the coating of the obtained product with the lithium raw material and metal raw material is performed by mixing them in an organic solvent and coating them,
the lithium raw material is lithium alkoxide,
the metal raw material is metal alkoxide, and
the solvent is an alcohol-based solvent.

26. The method of preparing the positive electrode active material for the all-solid-state rechargeable battery as claimed in claim 19, wherein
the second heat treatment is performed in a temperature range of 250 °C to 400 °C.

27. The method of preparing the positive electrode active material for the all-solid-state rechargeable battery as claimed in claim 19, wherein
an aluminum raw material is not mixed during the first heat treatment process.

28. An all-solid-state rechargeable battery, comprising
a positive electrode comprising the positive electrode active material as claimed in any one of claim 1 to claim 18,
a negative electrode, and
a solid electrolyte layer between the positive electrode and the negative electrode.

29. The all-solid-state rechargeable battery as claimed in claim 28, wherein
the positive electrode further comprises a sulfide-based solid electrolyte.

30. The all-solid-state rechargeable battery as claimed in claim 29, wherein
the positive electrode comprises 65 to 99 wt% of the positive electrode active material and 1 to 35 wt% of the sulfide-based solid electrolyte based on 100 wt% of a total of the positive electrode active material and the sulfide-based solid electrolyte.

31. The all-solid-state rechargeable battery as claimed in claim 29, wherein
the sulfide-based solid electrolyte comprises argyrodite-type sulfide and is in a form of particles, and the average particle diameter (D50) of the particles is 0.1 µm to 1.9 µm.

32. The all-solid-state rechargeable battery as claimed in claim 28, wherein
the negative electrode comprises a current collector and a negative electrode coating layer located on the current collector and comprising a lithiophilic metal, a carbon material, or a combination thereof, and
a lithium metal layer formed by charging between the current collector and the negative electrode coating layer is included.
